(19)

Europäisches Patentamt
European Patent Office
Office européen des brevets

(11) **EP 2 508 990 A1**

(12) **EUROPEAN PATENT APPLICATION**

(43) Date of publication:
**10.10.2012  Bulletin 2012/41**

(51) Int Cl.:
***G06F 9/445*** (2006.01)

(21) Application number: **12160630.5**

(22) Date of filing: **21.03.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **04.04.2011  JP 2011082892**

(71) Applicant: **Fujitsu Limited**
**Kawasaki-shi, Kanagawa 211-8588 (JP)**

(72) Inventors:
• **Saeki, Kazue**
**Kawasaki-shi, Kanagawa 211-8588 (JP)**
• **Okano, Kenji**
**Kawasaki-shi, Kanagawa 211-8588 (JP)**

(74) Representative: **Stebbing, Timothy Charles**
**Haseltine Lake LLP**
**300 High Holborn**
**London WC1V 7JH (GB)**

(54) **Hypervisor replacing method and information processing device**

(57)     When executing (S1) firmware of a first hypervisor (1a) stored in a first memory area, an information processing device stores (S2) firmware of a second hypervisor (1b) into a second memory area. The information processing device issues (S3), from the first hypervisor (1a), a stopping instruction that instructs a caller of a hypervisor call to stop issuing a new hypervisor call.. The information processing device rewrites (S4) designating information, that designates a memory area storing firmware of a hypervisor executed by the information processing device, from a first value that designates the first memory area to a second value that designates the second memory area. The information processing device starts execution of the firmware of the second hypervisor in response to the rewriting of the designating information. The information processing device issues (S5), from the second hypervisor to the caller, a canceling instruction that cancels the stopping instruction.

F I G. 1

EP 2 508 990 A1

**Description**

FIELD

The present invention relates to replacement of firmware of a hypervisor.

BACKGROUND

In recent years, the use of hypervisors is increasing. A hypervisor is one kind of virtualization technique. There are various types of hypervisors, and a certain type of hypervisor is provided in the form of firmware.

In a computer system using the hypervisor provided in the form of firmware, the firmware is upgraded when, for example, a new version of the hypervisor is released. The firmware may be downgraded when a defect is found in the hypervisor of the new version that has already been installed. The firmware is replaced either when it is upgraded or when it is downgraded. Some documents, such as Japanese Laid-Open Patent Publication No. 2002-342102, are known with respect to an updating method of a firmware program.

Meanwhile, in a computer system using some kind of firmware, replacing (for example, upgrading) the firmware may involve a halt of the computer system. For example, according to an architecture designed to load the firmware on a memory only when the computer boots up, the replacement of the firmware involves a reboot of the computer, and therefore, involves a halt of the computer.

It is desirable, as much as possible, to prevent an outage of a certain service provided by a certain kind of a server. Consequently, the firmware may not be replaced in a timely manner in the server in order to prevent the outage of the service.

Therefore, if there is a technique that enables replacement of firmware without a halt of a system, such a technique is beneficial in promoting timely replacement of the firmware. For example, with respect to a redundant system including an active system and a standby system, the following updating method is proposed to automatically update a firmware program without temporarily halting the entire system.

When a program managing unit detects an update of a control program, the control program is downloaded through an interface to each of controlling units respectively provided in the active system and the standby system. The controlling units each store the received control program in their flash memories through their work memories.

The program managing unit then issues a program update instruction to the controlling unit of the standby system. When the controlling unit of the standby system that has received the update instruction replaces the control program to be updated, the program managing unit issues, to the controlling unit of the standby system, an instruction for switching to the active system and issues, to the controlling unit of the active system, an instruction for switching to the standby system. The program managing unit further issues an update instruction to the controlling unit that has switched from the active system to the standby system, thereby realizing the replacement of the control program to be updated.

SUMMARY

In order to allow firmware of a hypervisor to be replaced in a timely manner regardless of the use of an information processing device, it is beneficial to realize replacement of the firmware of the hypervisor without halting the information processing device. Note that a hypervisor may be used not only in a redundant system, but also in an information processing device that is not redundantly configured.

It is therefore desirable to realize the replacement of the firmware of the hypervisor while the information processing device is operating, regardless of whether the information processing device is redundantly configured or not.

According to an aspect of the invention, a hypervisor replacing method executed by an information processing device is provided.

The hypervisor replacing method includes storing, when the information processing device executes firmware of a first hypervisor stored in a first memory area, firmware of a second hypervisor into a second memory area different from the first memory area. The hypervisor replacing method further includes issuing, from the first hypervisor, a stopping instruction that instructs a caller of a hypervisor call to stop issuing a new hypervisor call.

The hypervisor replacing method further includes rewriting designating information from a first value to a second value. The designating information designates a memory area storing firmware of a hypervisor executed by the information processing device. The first value designates the first memory area, and the second value designates the second memory area.

The hypervisor replacing method further includes starting execution of the firmware of the second hypervisor in response to the rewriting of the designating information. The hypervisor replacing method further includes issuing, from the second hypervisor to the caller, a canceling instruction that cancels the stopping instruction.

Other aspects of the present invention are as defined in the independent claims. Firmware in accordance with the present invention may be stored on one or more computer-readable media.

BRIEF DESCRIPTION OF DRAWINGS

FIG. 1 is a diagram explaining an operation of an information processing device of a first embodiment;

FIG. 2 is a block configuration diagram of an information processing device of a second embodiment;

FIG. 3 is a hardware configuration diagram of the information processing device of the second embodiment;

FIG. 4 is a diagram schematically explaining virtualization using a hypervisor;

FIG. 5 is a diagram explaining memory allocation related to firmware of the hypervisor according to the second embodiment;

FIG. 6 is a diagram illustrating an example of a data area;

FIG. 7 is a diagram illustrating an example of a code area;

FIG. 8 is a sequence diagram illustrating an example of replacement of the hypervisor;

FIG. 9 is a flowchart of a replacement process for replacing the hypervisor;

FIG. 10 is a flowchart of preprocessing in the second embodiment;

FIG. 11 is a flowchart of a code loading process in the second embodiment;

FIG. 12 is a flowchart of a data loading process in the second embodiment;

FIG. 13 is a flowchart of a switching process in the second embodiment;

FIG. 14 is a diagram explaining memory allocation related to the firmware of the hypervisor according to a third embodiment; and

FIG. 15 is a flowchart of a switching process in the third embodiment.

DESCRIPTION OF EMBODIMENTS

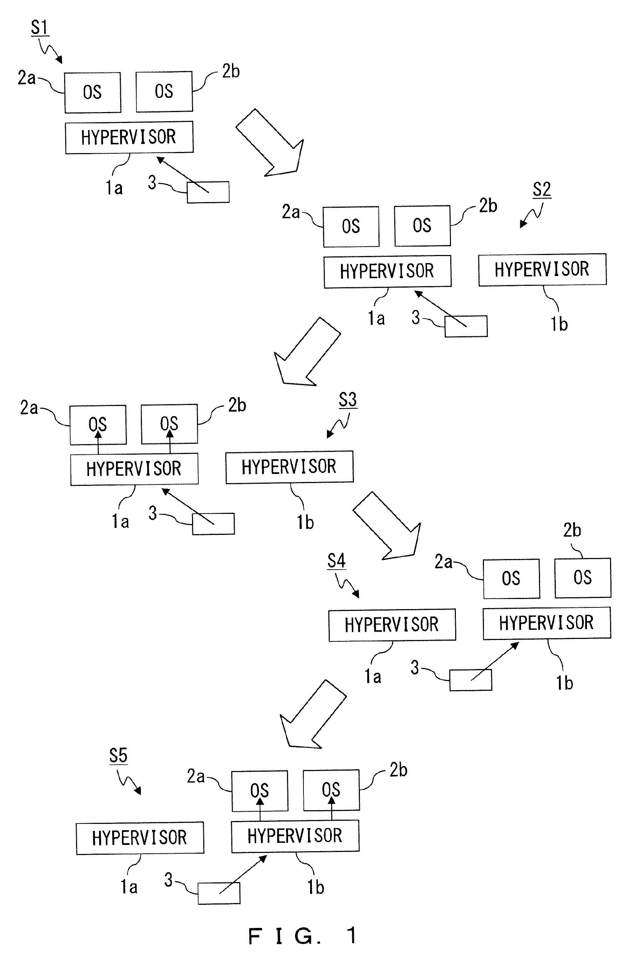

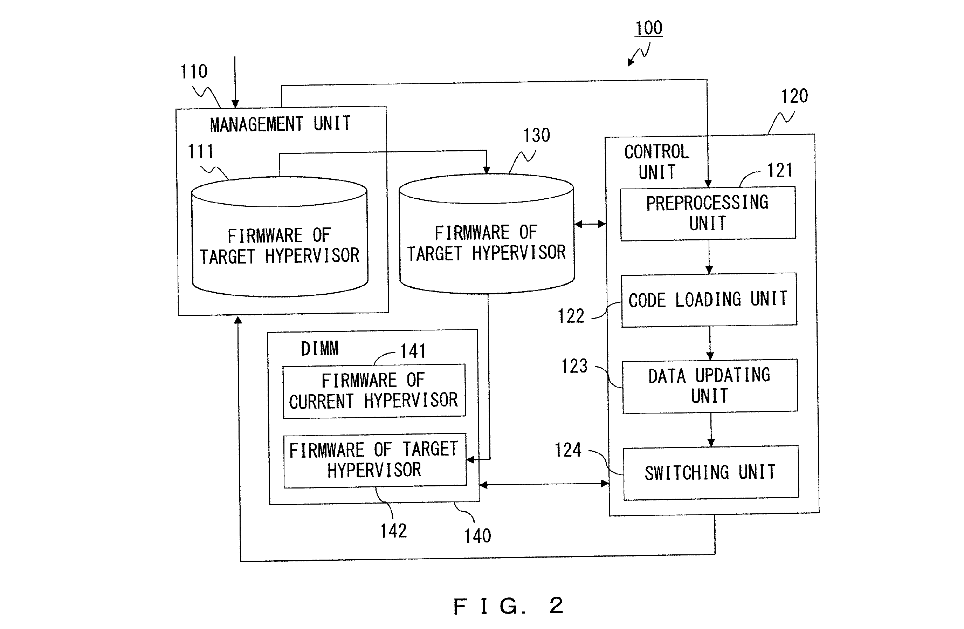

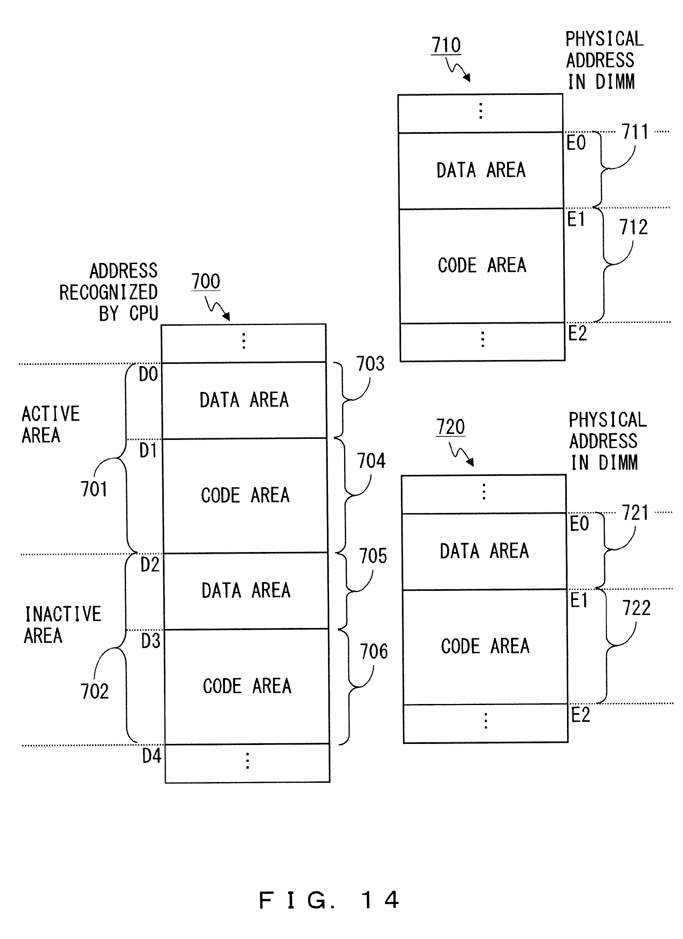

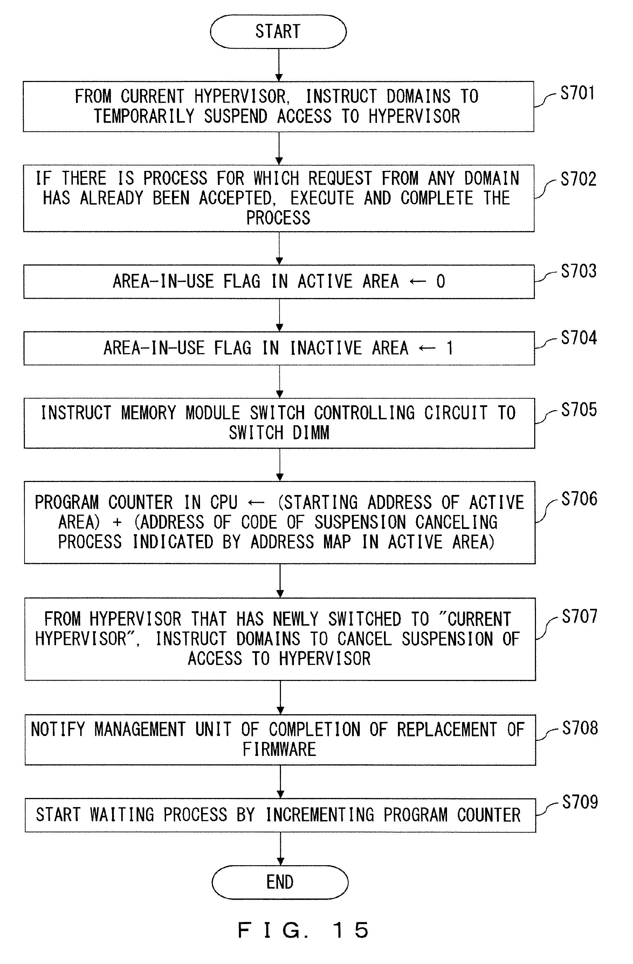

Hereinafter, embodiments will be described in detail with reference to the drawings. Specifically, a first embodiment will be described with reference to FIG. 1. A second embodiment will be described with reference to FIGS. 2 to 13. A third embodiment will be described with reference to FIGS. 14 and 15. Other modified examples will then be described.

FIG. 1 is a diagram explaining an operation of an information processing device of the first embodiment. The information processing device, which is not illustrated in FIG. 1, includes a memory and a CPU (Central Processing Unit).

The CPU loads a program into the memory and executes the program while using the memory also as a working area. The CPU executes various programs, such as firmware of a hypervisor, a program of an OS (Operating System) running on the hypervisor, and an application program running on the OS.

A virtual environment on the hypervisor is called a "domain", a "logical domain", a "partition", etc. Although the term "domain" will be used for the convenience of the description in the present specification, this is not intended to limit the specific type of the hypervisor.

There may be one domain on the hypervisor or there may be a plurality of domains on the hypervisor. Each domain includes one OS. Each domain may further include one or more device drivers and one or more applications. In the example of FIG. 1, there are two domains running on the hypervisor. Only OSs 2a and 2b in the domains are illustrated in FIG. 1, and the device driver (s) and the application(s) in the domains are not illustrated in FIG. 1.

Specifically, the information processing device of the first embodiment operates as follows.

In step S1, the information processing device (more specifically, the CPU included in the information processing device) is executing firmware of a hypervisor1 a stored in a first memory area in the memory. In the example of FIG. 1, the OSs 2a and 2b are running on the hypervisor la in step S1.

When the information processing device is executing the firmware of the hypervisor 1a as in step S1, a user may give the information processing device an input for instructing the information processing device to replace the hypervisor 1a with a hypervisor 1b. For example, the user may want to replace the hypervisor 1a of a certain version with the hypervisor 1b of another version to upgrade or downgrade the hypervisor. Consequently, the user inputs a replacing instruction for replacing the hypervisor 1a with the hypervisor 1b through an input device (such as a button and/or a keyboard), which is not illustrated in FIG. 1.

After the replacing instruction is inputted, the information processing device stores the firmware of the hypervisor 1b in a second memory area in step S2. The second memory area is different from the first memory area that stores the firmware of the hypervisor 1a.

Specifically, the firmware of the hypervisor 1a includes code for causing the information processing device to execute a process of storing, in the second memory area, the firmware of the hypervisor 1b designated as a replacement target. Therefore, the information processing device, which is executing the hypervisor 1a, operates in accordance with the firmware of the hypervisor 1a and thereby stores the firmware of the hypervisor 1b in the second memory area as in step S2.

Then in step S3, the information processing device issues a stopping instruction from the hypervisor 1a. The stopping instruction instructs a caller of a hypervisor call to stop issuing a new hypervisor call. The stopping instruction is individually issued to every caller of a hypervisor call. Specifically, in the example of FIG. 1, the hypervisor 1 a issues the stopping instruction to each of the OSs 2a and 2b.

A hypervisor call is also referred to as a "hypercall". A hypervisor call from the OS 2a is an interface for the OS 2a in the domain to access the hypervisor. A hypervisor call from the OS 2b is an interface for the OS 2b in the domain to access the hypervisor.

The OSs 2a and 2b, which have each received the stopping instruction, stop issuing a new hypervisor call. As a result, the OSs 2a and 2b temporarily stop accessing the hypervisor 1a. The stopping instruction is issued in order to prevent the OS 2a or 2b from accessing the hypervisor during the switch from the hypervisor 1a to the hypervisor 1b.

Meanwhile, the information processing device holds designating information 3 for designating a memory area storing the firmware of the hypervisor executed by the information processing device.

The designating information 3 may be stored in, for example, a predetermined register in the CPU. Depending on the architecture of the information processing device, the "predetermined register" may be, for example, a base register indicating an offset used in addressing or may be a register indicating an address to jump to when a trap instruction is detected.

The information processing device may also include an address translation circuit that translates, into a physical address, a logical address outputted to an address bus by the CPU. In this case, the designating information 3 may be stored in a storage device (e.g., a register) in the address translation circuit.

The address translation circuit maps the same logical address to different physical addresses according to the designating information 3. Therefore, in the information processing device including the address translation circuit, it is possible for the CPU to access different memory areas in one memory module using the same logical address.

The designating information 3 may be stored at a predetermined address in the memory. For example, the predetermined address, at which the designating information 3 is stored, may be a predetermined address in a predetermined area for the firmware of the hypervisor. Depending on the architecture, an interrupt vector may be stored in a predetermined area on the memory, and the address to jump to when a trap instruction is detected may be indicated by a particular element of the interrupt vector. In this case, the predetermined address, at which the designating information 3 is stored, may be the address of the particular element of the interrupt vector.

The information processing device may include a plurality of physically different memory modules and may use the plurality of memory modules while switching among them from one to another. In this case, the designating information 3 may be stored in a memory module switch controlling circuit for enabling the information processing device to switch among the memory modules from one to another to use one of them. The designating information 3 may be stored in, for example, a storage device (e.g., a register or a flip-flop) in the memory module switch controlling circuit, or the designating information 3 may be indicated by whether a particular transistor in the memory module switch controlling circuit is turned on or turned off.

In this way, it may vary depending on the embodiment where in the information processing device the designating information 3 is specifically stored. The designating information 3 may also be stored in a plurality of devices in the information processing device, such as in both the memory and the register in the CPU.

No matter where the designating information 3 is specifically stored, the designating information 3 designates the first memory area, in which the firmware of the hypervisor 1 is stored, during the above-mentioned steps S1 to S3 as illustrated by arrows in FIG. 1. Then, in step S4, the information processing device rewrites the designating information 3 from a first value designating the first memory area to a second value designating the second memory area. The information processing device then starts execution of the firmware of the hypervisor 1b in response to the rewriting of the designating information 3.

Specifically, the firmware of the hypervisor 1a includes code for rewriting the designating information 3 and code for switching from the hypervisor 1a to the hypervisor 1b. Therefore, in step S4, the information processing device operates in accordance with the firmware of the hypervisor 1a, thereby rewriting the designating information 3 and carrying out the switch from the hypervisor 1a to the hypervisor 1b. As a result, the information processing device starts executing the firmware of the hypervisor 1b in step S4.

The OSs 2a and 2b in step S4 are still temporarily suspending the access to the hypervisor in accordance with the instruction in step S3.

The switch from the hypervisor 1a to the hypervisor 1b is transparent to the OS 2a. In other words, the interface for the OS 2a to access the hypervisor 1a and the interface for the OS 2a to access the hypervisor 1b are the same hypervisor call. Therefore, the OS 2a does not recognize the switch of the hypervisor. The switch from the hypervisor 1a to the hypervisor 1b is similarly transparent to the OS 2b.

Therefore, in FIG. 1, the blocks of the OSs 2a and 2b are depicted over the block of the hypervisor 1a in steps S1 to S3, whereas the blocks of the OSs 2a and 2b are depicted over the block of the hypervisor 1b in steps S4 and S5. In other words, the OSs 2a and 2b come to run on the hypervisor 1b as a result of the switch of the hypervisor in step S4.

Note that the stopping instruction in step S3 is still valid for the OSs 2a and 2b. Therefore, the OSs 2a and 2b do not actually access the hypervisor 1b in step S4 yet.

In the following step S5, the information processing device issues, from the hypervisor 1b, a canceling instruction that cancels the stopping instruction. The canceling instruction is individually issued to every caller of a hypervisor call. Specifically, in the example of FIG. 1, the canceling instruction is issued from the hypervisor 1b to each of the OSs 2a and 2b.

As described, the switch of the hypervisor is transparent to the OSs 2a and 2b. Therefore, the OSs 2a and 2b simply recognize that issuing a hypervisor call is now allowed though it was instructed in the past to stop issuing the hypervisor call.

The OSs 2a and 2b, which have each received the canceling instruction in step S5, will hereafter invoke hypervisor calls as necessary. In other words, the OSs 2a and 2b running on the hypervisor 1b are enabled to actually access the hypervisor 1b by receiving the canceling instruction in step S5.

In the first embodiment in FIG. 1, the hypervisor is accessed through hypervisor calls from the OSs. Therefore, the stopping instruction and the canceling instruction are issued to each of the OSs 2a and 2b. On the other hand, in an embodiment in which a device driver may invoke a hypervisor call, the hypervisor 1a issues the stopping instruction also to the device driver, and the hypervisor 1b issues the canceling instruction also to the device driver. The stopping instruction stops access to the hypervisor and the canceling instruction allows access to the hypervisor, regardless of whether the stopping instruction and the canceling instruction are issued only to the OSs or issued to both the OSs and the device driver.

The above-explained operation of the information processing device as illustrated in FIG. 1 realizes replacement of the hypervisor without rebooting the information processing device (specifically, without rebooting the CPU that is done by shutting down the power supply followed by turning on the power supply again). In other words, the firmware of the hypervisor is replaced while the information processing device is operating (more specifically, while the information processing device is being powered on and while the OSs 2a and 2b are running). In this way, the first embodiment makes it possible, while not necessitating halting the information processing device, to replace the firmware of the hypervisor 1a with the firmware of the hypervisor 1b and to cause the information processing device to execute the firmware of the hypervisor 1b.

As described, the replacement of the hypervisor according to the first embodiment does not halt user programs (such as OSs, device drivers, and applications) executed on the domains. In other words, the replacement of the hypervisor according to the first embodiment is transparent to the user programs. Therefore, according to the first embodiment, even if the information processing device is used to provide a service whose halt is not preferable, the service is not suspended due to the replacement of the hypervisor.

Thus, the administrator of the information processing device (for example, a server) is enabled to determine to replace the hypervisor in a timely manner, independently of the schedule of providing the service. As a result, timely replacement of the hypervisor is promoted. The timely replacement of the hypervisor is preferable. For example, the timely replacement of the hypervisor is preferable from the viewpoint of improving the security when a hypervisor of a new version to which a patch for fixing vulnerability is applied is released.

A defect may be found later in the hypervisor 1b that has replaced the hypervisor 1a, therefore necessitating switching back from the hypervisor 1b to the hypervisor 1a. Even in such a case, the hypervisor 1b is able to be replaced with the hypervisor 1a without halting the CPU, in a similar way as described above. Therefore, even if a defect is found in the hypervisor 1b, the CPU does not have to be halted, and the user programs do not have to be halted.

The replacement of the hypervisor according to the first embodiment is realizable as long as the memory includes the first memory area and the second memory area, and also as long as the information processing device holds the designating information 3. In other words, the information processing device does not have to be a redundant system including an active system and a standby system.

Obviously, the memory may be redundant. In other words, the first memory area and the second memory area may be allocated on physically different memory modules.

In any case, according to the first embodiment, the information processing device simultaneously holds the firmware of the hypervisor 1a and that of the hypervisor 1b (i.e., respective instances of the firmware of the hypervisors of two generations) in two memory areas, and thereby enabling the replacement of the hypervisor without the need to reset the CPU.

A second embodiment will now be described with reference to FIGS. 2 to 13. For the convenience of the description, a currently running hypervisor is hereinafter called a "current hypervisor". When the current hypervisor is to be replaced with a certain other hypervisor, the certain other hypervisor that is the target of the replacement is called a "target hypervisor".

For example, when a hypervisor of version 2 is currently running and the hypervisor is to be upgraded from version 2 to version 3, the current hypervisor is the hypervisor of version 2, and the target hypervisor is the hypervisor of version 3. Conversely, when the hypervisor of version 3 is currently running and the hypervisor is to be downgraded from version 3 to version 2, the current hypervisor is the hypervisor of version 3, and the target hypervisor is the hypervisor of version 2.

FIG. 2 is a block configuration diagram of an information processing device of the second embodiment. An information processing device 100 of FIG. 2 includes a management unit 110 and a control unit 120. The management unit 110 and the control unit 120 cooperatively execute a process for replacing the firmware of the hypervisor (hereinafter, this process is also called a "replacement process"). The information processing device 100 further includes a storage unit 130 that is accessible from both the management unit 110 and the control unit 120. The information processing device 100 also includes a DIMM (Dual In-line Memory Module) 140 that is accessible from at least the control unit 120.

The management unit 110 includes a storage unit 111 that stores the firmware of the target hypervisor. When the firmware of the target hypervisor is stored into the storage unit 111, the management unit 110 starts the replacement process. Specifically, the management unit 110 copies the firmware of the target hypervisor stored in the storage unit 111 to the storage unit 130. When the copying is completed, the management unit 110 then notifies the control unit 120 of the completion of the copying.

The control unit 120 includes a preprocessing unit 121, a code loading unit 122, a data updating unit 123, and a switching unit 124. As described later in detail, the control unit 120 is realized by a CPU executing the firmware of the hypervisor. In other words, the firmware of the hypervisor includes not only code for providing each domain with a virtual environment, but also code for realizing the preprocessing unit 121, the code loading unit 122, the data updating unit 123, and the switching unit 124. A summary of the operation of the control unit 120 is as follows.

The preprocessing unit 121 first receives the above-mentioned notification of the completion from the management unit 110. Triggered by the reception of the notification, the preprocessing unit 121 determines whether to continue the replacement process or to end it.

If the preprocessing unit 121 determines to end the replacement process, the preprocessing unit 121 notifies the management unit 110 of the end of the replacement process. On the other hand, if the preprocessing unit 121 determines to continue the replacement process, the code loading unit 122 copies the section of program code in the firmware of the target hypervisor stored in the storage unit 130 to an appropriate area in the DIMM 140.

For the convenience of the description, the section of the program code in the firmware of the hypervisor is hereinafter also called a "code area". The section of data in the firmware of the hypervisor is hereinafter also called a "data area".

The DIMM 140 includes at least two areas used for the hypervisor, and firmware 141 of the current hypervisor is stored in one of these areas. The code loading unit 122 copies the code area in firmware 142 of the target hypervisor from the storage unit 130 to the area not storing the firmware 141 of the current hypervisor.

For the convenience of the description, the area where the firmware 141 of the current hypervisor is stored is hereinafter also called an "active area". The area where the firmware 141 of the current hypervisor is not stored is hereinafter also called an "inactive area".

The data updating unit 123 then loads the data area within the firmware of the target hypervisor stored in the storage unit 130 onto the inactive area in the DIMM 140. In addition, the data updating unit 123 converts the format of part of the data included in the data area in the firmware 141 of the current hypervisor as necessary and then loads the format-converted data onto the inactive area in the DIMM 140.

The switching unit 124 then performs switch from the current hypervisor to the target hypervisor. Although details of processes associated with the switch will be described later, these processes are, in summary, similar to the processes of steps S3 to S5 in FIG 1. Some of the functions of the switching unit 124 are realized by the CPU executing the firmware 141 of the current hypervisor, and the other functions of the switching unit 124 are realized by the CPU executing the firmware 142 of the target hypervisor.

After the completion of the switch from the current hypervisor to the target hypervisor, the switching unit 124 notifies the management unit 110 of the completion of the replacement process.

According to the replacement process executed by the management unit 110 and the control unit 120 as described above, the current hypervisor is replaced with the target hypervisor without physically rebooting the information processing device 100. In other words, shutting down the power supply and turning on the power supply again are not necessary to replace the hypervisor, and thus, the hypervisor is replaced while the information processing device 100 is operating. Therefore, the replacement of the current hypervisor with the target hypervisor is executed without causing a halt of a service provided by the information processing device 100.

Therefore, in determining the schedule of the replacement of the current hypervisor with the target hypervisor, it is not necessary to take into consideration the timing at which the halt of the service is acceptable. In other words, the second embodiment makes it possible to replace the current hypervisor with the target hypervisor at an arbitrary timing, thereby realizing timely replacement.

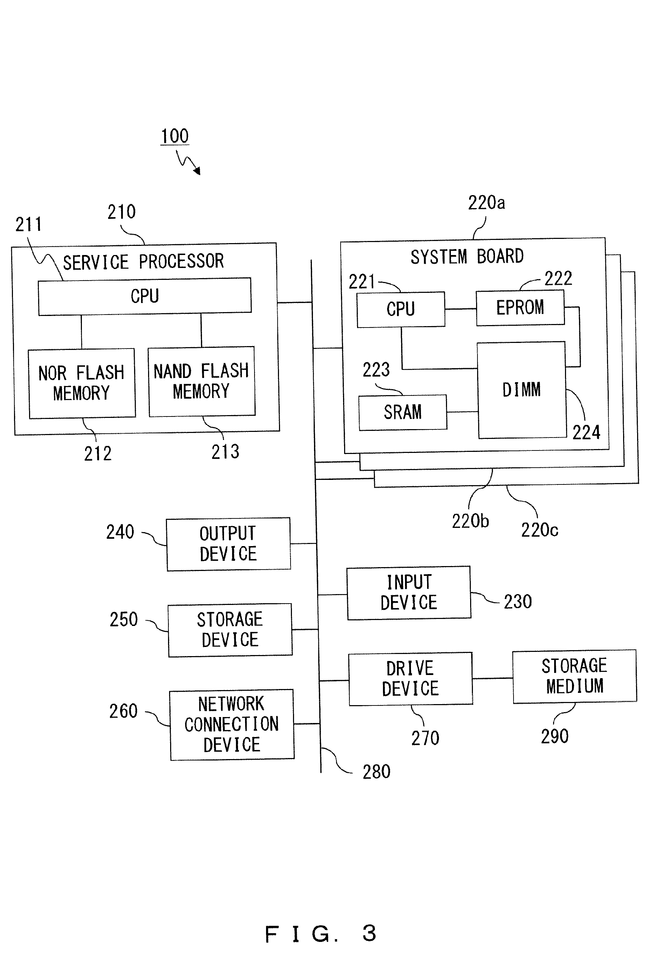

A hardware configuration of the information processing device 100 of FIG. 2 will now be described with reference to a hardware configuration diagram of FIG. 3.

Specifically, the information processing device 100 includes a service processor 210 and one or more system boards. Although three system boards 220a to 220c are illustrated in FIG. 3, the system boards 220b and 220c may be omitted. Conversely, the information processing device 100 may include four or more system boards.

The information processing device 100 further includes an input device 230, an output device 240, a storage device 250, a network connection device 260, and a drive device 270. The service processor 210, the system boards 220a to 220c, the input device 230, the output device 240, the storage device 250, the network connection device 260, and the drive device 270 are connected to each other through a bus 280.

A computer-readable storage medium 290 may be set to the drive device 270. A crossbar switch may be used in place of the bus 280.

The service processor 210 includes a CPU 211, a NOR flash memory 212, and a NAND flash memory 213. The CPU 211 is connected to the NOR flash memory 212 and the NAND flash memory 213. Obviously, the type of the memory included in the service processor 210 is not limited to the types exemplified in FIG. 3, and may be appropriately modified depending on the embodiment.

The system board 220a includes a CPU 221, an EPROM (Erasable Programmable Read Only Memory) 222, an SRAM (Static Random Access Memory) 223, and a DIMM 224. The CPU 221 is connected to the EPROM 222 and the DIMM 224. The EPROM 222 and the SRAM 223 are also connected to the DIMM 224.

Obviously, the type of the memory included in the system board 220a is not limited to the types exemplified in FIG. 3, and may be appropriately modified depending on the embodiment. The system boards 220b and 220c are configured similarly to the system board 220a.

The service processor 210 operates independently of the system boards 220a to 220c. For example, the service processor 210 may monitor the voltage, the temperature, etc., based on the outputs of sensors, which are not illustrated in the drawings, and may execute an appropriate process according to the result of monitoring. The service processor 210 may provide a function of a forced reboot of the information processing device 100.

Specifically, the NOR flash memory 212 stores, in advance, firmware for the service processor 210. The CPU 211 of the service processor 210 operates, while using the NOR flash memory 212 as a working area, in accordance with the firmware stored in the NOR flash memory 212.

The NAND flash memory 213 is used to exchange data between the service processor 210 and the system boards 220a to 220c.

For example, in order to replace the firmware of the hypervisor of the system board 220a, the firmware 142 of the target hypervisor is copied to the system board 220a from outside of the system board 220a. In the present embodiment, the firmware 142 of the target hypervisor is first stored in the NAND flash memory 213 of the service processor 210 and then copied from the NAND flash memory 213 to the EPROM 222 in the system board 220a. Subsequently, the firmware 142 of the target hypervisor is coped from the EPROM 222 to the DIMM 224 within the system board 220a.

The NAND flash memory 213 is used as an interface for transferring the firmware 142 of the target hypervisor from the service processor 210 to the system board 220a as exemplified above.

The types or versions of the hypervisors respectively running on the system boards 220a to 220c may be different from each other. In other words, the hypervisors on the system boards are independent of each other. Therefore, replacement of the hypervisor on one system board is executable independently of the other system boards. For convenience, replacement of the hypervisor on the system board 220a is described below as an example.

The service processor 210 of FIG. 3 realizes the management unit 110 of FIG. 2. In other words, the firmware for the service processor 210 stored in the NOR flash memory 212 includes code for causing the service processor 210 to operate as the management unit 110.

The NAND flash memory 213 in the service processor 210 may realize the storage unit 111, which stores the firmware of the target hypervisor in the management unit 110. Obviously, another type of rewritable memory may be used as the storage unit 111 in place of the NAND flash memory 213.

In a case where the hypervisor on the system board 220a is to be replaced, the EPROM 222 in the system board 220a may realize the storage unit 130, which is illustrated in FIG. 2 and to which the firmware of the target hypervisor is copied. Obviously, another type of rewritable memory may be used as the storage unit 130 in place of the EPROM 222.

In a case where the hypervisor on the system board 220a is to be replaced, the DIMM 140 of FIG. 2 is the DIMM 224 in the system board 220a. In this case, the CPU 221 of the system board 220a executes the firmware of the hypervisor on the DIMM 224, thereby realizing the control unit 120 of FIG. 2.

Not only the firmware of the hypervisor, but also various other programs, such as OSs and applications, are loaded into the DIMM 224. The CPU 221 executes various programs loaded into the DIMM 224 while using the DIMM 224 also as a working area.

Meanwhile, the service processor 210 not only operates as the management unit 110, but also executes various processes such as monitoring the voltage as described above. Some of the processes executed by the service processor 210 involve input and output of small-sized data, such as control data, between the service processor 210 and the system boards 220a to 220c. For example, the SRAM 223 on the system board 220a may be used as an interface for exchanging the control data between the service processor 210 and the system board 220a.

As described, when the management unit 110 of FIG. 2 finishes copying the firmware of the target hypervisor from the storage unit 111 to the storage unit 130, the management unit 110 notifies the preprocessing unit 121 in the control unit 120 of the completion of the copying. Meanwhile, when the replacement of the hypervisor is completed, the switching unit 124 notifies the management unit 110 of the completion of the replacement.

The above-mentioned notifications of completion may be made through the SRAM 223. For example, the CPU 211 in the service processor 210 may set a flag stored in a predetermined area in the SRAM 223 in the system board 220a, thereby notifying the CPU 221 in the system board 220a of the completion of the copying. Similarly, the CPU 221 in the system board 220a may set a flag stored in another predetermined area in the SRAM 223, thereby notifying the CPU 211 in the service processor 210 of the completion of the replacement.

Meanwhile, the input device 230 is, for example, a keyboard, a button, a pointing device (such as a mouse or a touchscreen), a microphone, or a combination of these. The output device 240 is, for example a display, a speaker, or a combination of these. The display may be the touchscreen.

The storage device 250 is an external storage device such as a hard disk device. Various programs, such as OSs and applications, are stored in the storage device 250, and they are loaded from the storage device 250 into the DIMM 224.

The network connection device 260 is, for example, a device that provides a network interface for a wired LAN (Local Area Network), a wireless LAN, or both. The network connection device 260 may be, for example, a NIC (Network Interface Card).

The drive device 270 is a drive device for the computer-readable storage medium 290. The storage medium 290 may be any of a magnetic disk, a magneto-optical disk, an optical disk such as a CD (Compact Disc) and a DVD (Digital Versatile Disk), and a semiconductor memory such as a USB (Universal Serial Bus) memory card.

The NOR flash memory 212, the NAND flash memory 213, the EPROM 222, the SRAM 223, the DIMM 224, the storage device 250, and the storage medium 290, all of which are illustrated in FIG. 3, are examples of tangible storage media. In other words, these tangible storage media illustrated in FIG. 3 are not transitory media such as a signal carrier.

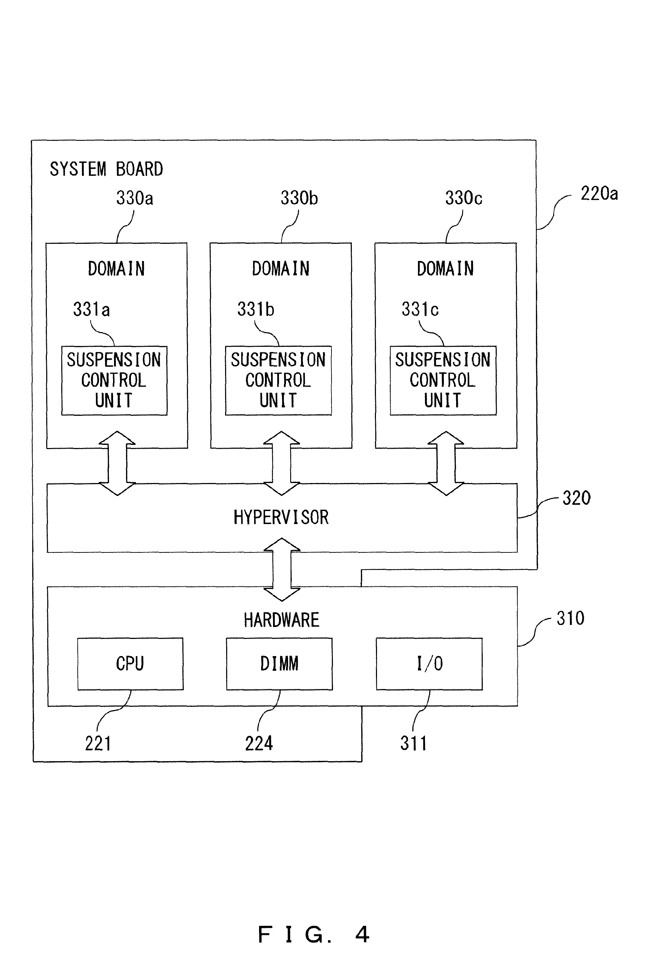

Meanwhile, virtualization using the hypervisor is implemented in the information processing device 100 configured as in FIGS. 2 and 3. FIG 4 is a diagram schematically explaining the virtualization using the hypervisor. Since the hypervisors on the system boards are independent of each other as described above, FIG. 4 only illustrates virtualization in the system board 220a.

The information processing device 100 includes various pieces of hardware 310. Examples of the hardware 310 include the CPU 221 and the DIMM 224 on the system board 220a. Another example of the hardware 310 is an input/output device (hereinafter, abbreviated as "I/O") 311 outside of the system board 220a. Specific examples of the I/O 311 include the input device 230, the output device 240, the storage device 250, and the drive device 270. The hardware 310 may further include one or more other devices such as the network connection device 260.

A hypervisor 320 hides the physical hardware 310 and provides virtual environments. The virtual environments provided by the hypervisor 320 are also called "domains" as described above.

In the example of FIG. 4, there are three domains 330a to 330c on the system board 220a. An OS, a device driver(s), and an application(s) run on each domain.

An access from any of the domains 330a to 330c to the hypervisor 320 is made through a hypervisor call. For example, an embodiment in which only the OSs invoke the hypervisor calls is possible, and an embodiment in which both the OSs and the device drivers invoke the hypervisor calls is also possible.

The caller of the hypervisor call in the domain 330a (i.e., the OS, the device driver, or both in the domain 330a) includes a suspension control unit 331a. The domains 330b and 330c similarly include suspension control units 331b and 331c, respectively.

When the suspension control unit 331a receives, from the hypervisor 320, a stopping instruction for instructing the domain 330a to stop the hypervisor call, the suspension control unit 331a stops the hypervisor call. In other words, upon receipt of the stopping instruction, the suspension control unit 331a suspends access to the hypervisor 320. As a result, the access from the domain 330a to the hypervisor 320 is temporarily stopped.

When the suspension control unit 331a receives a canceling instruction for canceling the stopping instruction from the hypervisor 320, the suspension control unit 331a cancels the suspension of the hypervisor call. As a result, the access from the domain 330a to the hypervisor 320 is resumed.

The suspension control unit 331a may include a queue which is not illustrated and which is provided for storing one or more hypervisor calls. In the period from the reception of the stopping instruction to the reception of the canceling instruction, the suspension control unit 331a may store, in the queue, the content of each hypervisor call to be invoked, instead of actually invoking the hypervisor call.

The suspension control unit 331a may use, for example, a control flag indicating whether the hypervisor call is permitted or not. The suspension control unit 331 is able to determine whether to invoke the hypervisor call or to store the content of the hypervisor call in the queue, in accordance with the value of the control flag.

For example, when the stopping instruction is received, the suspension control unit 331a may set the control flag to a value (for example, 0) indicating that the hypervisor call is prohibited. When the canceling instruction is received, the suspension control unit 331a may set the control flag to a value (for example, 1) indicating that the hypervisor call is permitted.

Alternatively, the hypervisor 320 may rewrite the value of the control flag from 1 to 0, thereby realizing the issuance of the stopping instruction from the hypervisor 320. The hypervisor 320 may rewrite the value of the control flag from 0 to 1, thereby realizing the issuance of the canceling instruction from the hypervisor 320.

The suspension control units 331b and 331c also operate similarly to the suspension control unit 331a. In other words, the suspension control units 331a to 331c included in the OSs and/or the device drivers control the suspension and the resumption of the hypervisor calls.

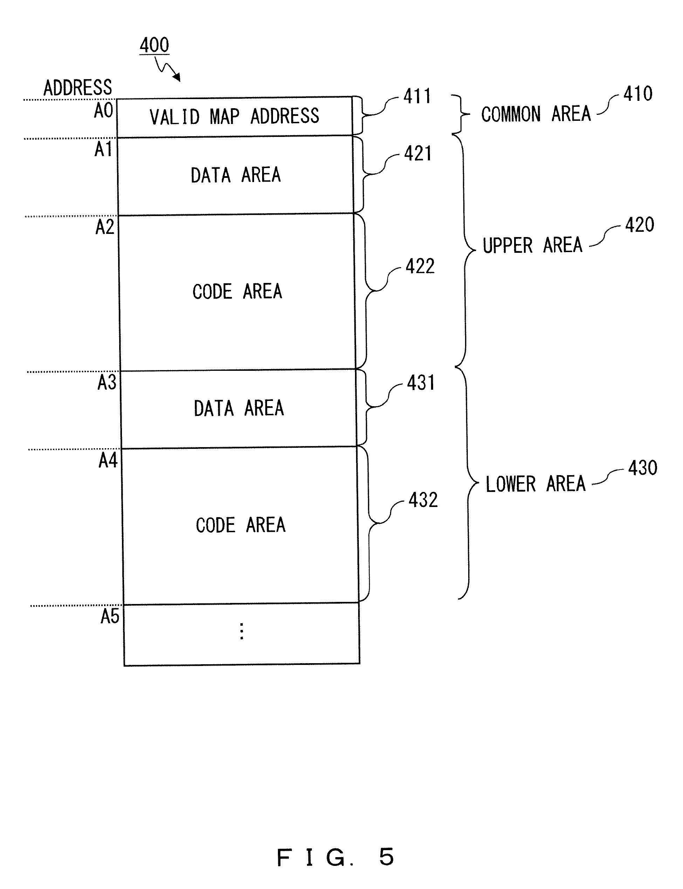

The second embodiment will now be described in further detail with reference to FIGS. 5 to 13.

FIG. 5 is a diagram explaining memory allocation related to the firmware of the hypervisor according to the second embodiment. Specifically, FIG. 5 is a diagram explaining physical memory allocation in the DIMM 140 of FIG. 2 corresponding to the DIMM 224 of FIG. 3.

Addresses "A0" to "A5" illustrated in FIG. 5 denote physical addresses of the DIMM 140 (i.e., the DIMM 224). The domains 330a to 330c do not recognize the physical addresses of the DIMM 140 (i.e., the physical addresses of the real machine).

As illustrated in FIG. 5, an area 400 for the hypervisor includes a common area 410 that starts at the address A0. The area 400 for the hypervisor also includes two areas for respectively storing two versions of the firmware of the hypervisor. Of these two areas, the area that starts at the address A1 will be called an "upper area 420", and the area that starts at the address A3 will be called a "lower area 430" for the convenience of the description. In the second embodiment, the addresses A0, A1, and A3 are predetermined fixed addresses.

The firmware 141 of the current hypervisor of FIG. 2 is stored in the upper area 420 or stored in the lower area 430 depending on the situation. Therefore, the area to which the firmware 142 of the target hypervisor is copied may be the lower area 430 or the upper area 420 depending on the situation.

In other words, there may be a case where the upper area 420 is the active area and the lower area 430 is the inactive area; and there may be a case where the upper area 420 is the inactive area and the lower area 430 is the active area. As is clear from the flowcharts described later, the upper area 420 and the lower area 430 alternately serve as the active area.

Specifically, a valid map address 411 is stored in the common area 410. The valid map address 411 indicates in which of the upper area 420 and the lower area 430 the firmware 141 of the current hypervisor is stored. The valid map address 411 is one of the specific examples of the designating information 3 of FIG. 1.

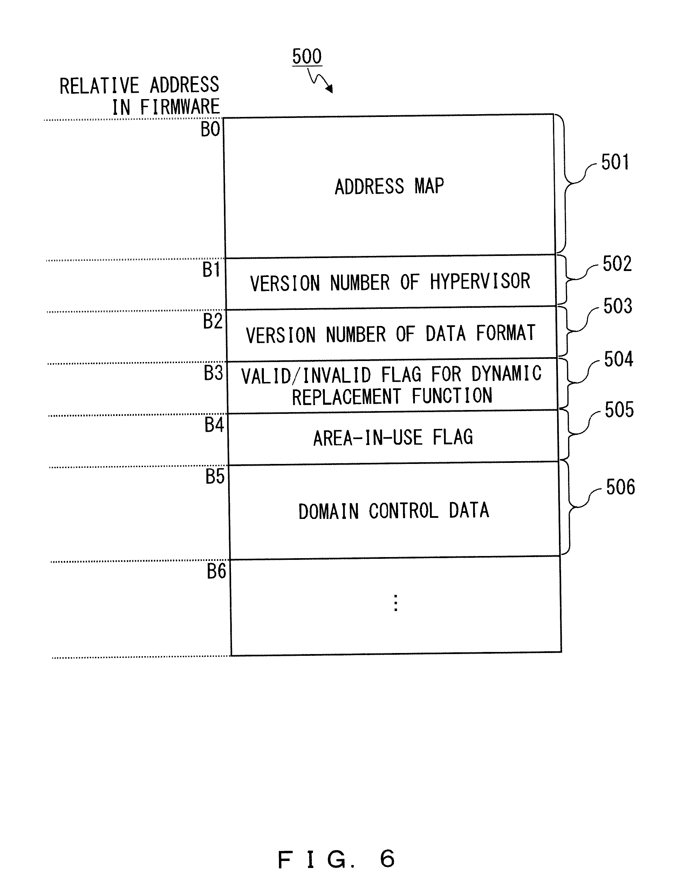

In other words, the valid map address 411 indicates the address where the currently valid address map is stored. The address map will be described later with reference to FIG. 6. More specifically, the valid map address 411 indicates the starting address A1 of the upper area 420 or the starting address A3 of the lower area 430.

The firmware 141 of the current hypervisor or the firmware 142 of the target hypervisor is stored in the upper area 420. In either case, the firmware of the hypervisor includes a data area 421 and a code area 422. In the example of FIG. 5, the data area 421 starts at the address A1, and the code area 422 starts at the address A2.

The firmware 142 of the target hypervisor or the firmware 141 of the current hypervisor is stored in the lower area 430. In either case, the firmware of the hypervisor includes a data area 431 and a code area 432. In the example of FIG. 5, the data area 431 starts at the address A3, and the code area 432 starts at the address A4.

Depending on the embodiment, one or more pieces of data may be stored all over the data area 421, which starts at the address A1 and which ends at the address (A2-1). Alternatively, one or more pieces of data may be stored only in the area from the address A1 to the address (A2-j) where j>1, and the rest of the data area 421 may not be used (i.e., the area from the address (A2-j+1) to the address (A2-1) may not be used). In other words, the data area 421 may include padding. The code area 422, the data area 431, and the code area 432 may similarly include unused areas at their ends.

Each of the data areas 421 and 431 includes various data as in FIG. 6. FIG. 6 is a diagram illustrating an example of a data area.

Specifically, a data area 500 of FIG. 6 is the data area 421 or 431 of FIG. 5. Addresses B0 to B6 in FIG. 6 are relative addresses in the firmware.

More specifically, when the data area 500 is the data area 421, the addresses of FIG. 6 are relative addresses relative to the address A1 of FIG. 5. When the data area 500 is the data area 431, the addresses of FIG. 6 are relative addresses relative to the address A3 of FIG. 5.

The data area 500 includes static data and dynamic data. The "static data" is constant data determined in a fixed manner according to the version of the hypervisor or data which is variable but whose initial value is statically determined according to the version of the hypervisor. The "dynamic data" is data that is dynamically rewritten by the hypervisor while the hypervisor is running. More specifically, the "dynamic data" is data which depends on, for example, the hardware configuration of a machine in which the hypervisor is installed, the number of domains managed by the hypervisor, and/or the states of the domains managed by the hypervisor.

Examples of the static data include an address map 501, the version number 502 of a hypervisor, the version number 503 of a data format, a valid/invalid flag 504 for a dynamic replacement function, and an area-in-use flag 505. An example of the dynamic data includes domain control data 506. The data area 500 may further include data other than the data illustrated in FIG. 6. The sequential order of the data items illustrated in FIG. 6 provides an example. The sequential order of the various data items in the data area 500 may be appropriately changed depending on the embodiment.

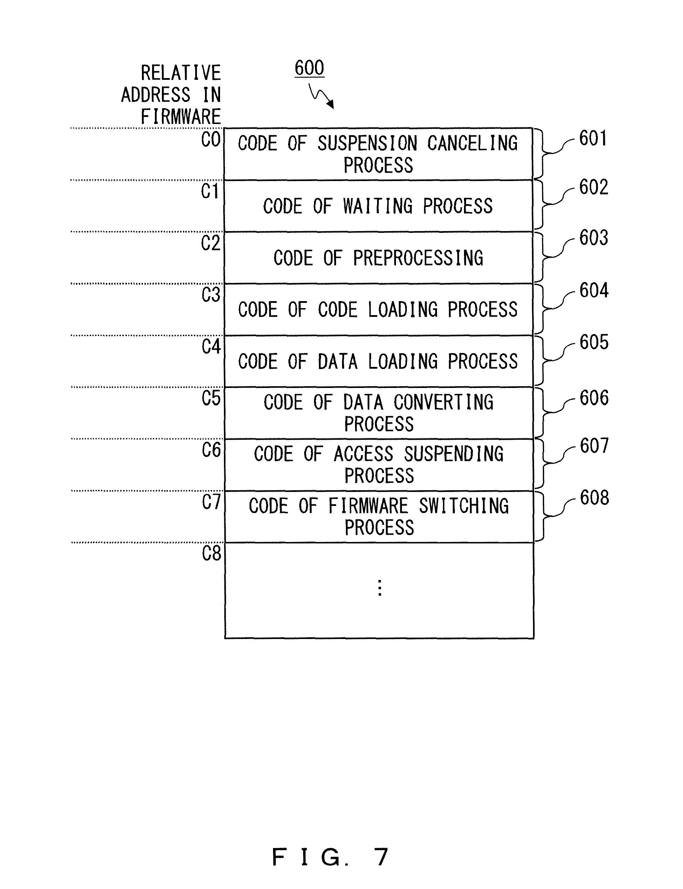

The address map 501 stored in an area that starts at the address B0 indicates details of the code area. Although described in detail later with reference to FIG. 7, the code area includes pieces of code for various processes executed by the hypervisor. The address map 501 is a map indicating at least the starting address of each process (i.e., each subroutine). The address map 501 may further indicate what kind of information is stored at which address in the data area 500.

In the example of FIG. 6, the version number 502 of the hypervisor is stored at the address B1. For example, when the data area 500 is the data area 421 of FIG. 5, the version number 502 of the hypervisor is the version number of the hypervisor whose firmware is stored in the upper area 420. Conversely, when the data area 500 is the data area 431 of FIG. 5, the version number 502 of the hypervisor is the version number of the hypervisor whose firmware is stored in the lower area 430.

In the example of FIG. 6, the version number 503 of the data format used by the hypervisor is stored at the address B2. In the second embodiment, not only the hypervisor itself, but also the format of the data used by the hypervisor is subject to versioning. More specifically, the version number 503 of the data format indicates the version of the data format of the dynamic data such as the domain control data 506.

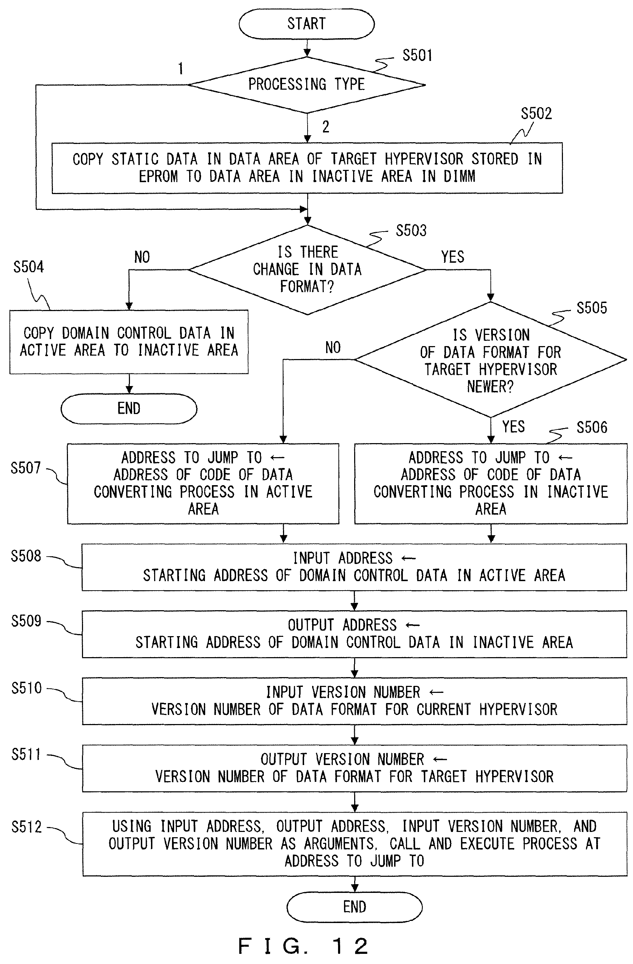

For example, the data format of version 1 may be used for the hypervisors of versions 1 to 3, and the data format of version 2 may be used for the hypervisors of versions 4 and 5. Under such a situation, for example, when the hypervisor is upgraded from version 2 to version 3, the conversion of the data format is not necessary. On the other hand, when the hypervisor is upgraded from version 3 to version 4, the data format is converted (as described in detail later with reference to FIG. 12).

For example, when the data area 500 is the data area 421 of FIG. 5, the version number 503 of the data format is the version number of the data format used by the hypervisor whose firmware is stored in the upper area 420. On the other hand, when the data area 500 is the data area 431 of FIG. 5, the version number 503 of the data format is the version number of the data format used by the hypervisor whose firmware is stored in the lower area 430. If the version numbers 503 of the data formats of two hypervisors are different from each other, the version number 502 of one hypervisor with the newer version number 503 of the data format is newer than the version number 502 of the other hypervisor.

In the example of FIG. 6, the valid/invalid flag 504 for the dynamic replacement function is further stored at the address B3 in the data area 500. The value of the valid/invalid flag 504 may be fixed or may be switched, while the hypervisor is running, in accordance with, for example, an input from the input device 230.

Even if the valid/invalid flag 504 is switchable, the initial value of the valid/invalid flag 504 is fixed. Therefore, the valid/invalid flag 504 is one of the static data.

For example, when the data area 500 is the data area 421 of FIG. 5, the valid/invalid flag 504 indicates whether it is valid or not to dynamically replace the hypervisor whose firmware is stored in the upper area 420 with the hypervisor whose firmware is stored in the lower area 430. The dynamic replacement means replacement of the hypervisor without involving a physical reboot of the CPU 221 (i.e., without shutting down the power supply followed by turning on the power supply again).

In other words, when the data area 500 is the data area 421 of FIG 5, the valid/invalid flag 504 indicates whether or not replacement with a hypervisor of another version is feasible without rebooting the CPU 221 while the hypervisor stored in the upper area 420 is running. Similarly, when the data area 500 is the data area 431 of FIG. 5, the valid/invalid flag 504 indicates whether replacement with a hypervisor of another version is feasible without rebooting the CPU 221 while the hypervisor stored in the lower area 430 is running.

In the example of FIG. 6, the area-in-use flag 505 is stored at the address B4 in the data area 500. The initial value of the area-in-use flag 505 is a value (for example, 0) indicating "not used". Although the area-in-use flag 505 is rewritten during the replacement process, the area-in-use flag 505 is one of the static data because the initial value of the area-in-use flag 505 is fixed.

More specifically, in a case where the data area 500 is the data area 421 of FIG. 5 and where the current hypervisor is the hypervisor stored in the upper area 420, the value of the area-in-use flag 505 is a value (for example, 1) indicating "used". On the other hand, in a case where the data area 500 is the data area 421 of FIG. 5 and where the current hypervisor is the hypervisor stored in the lower area 430, the value of the area-in-use flag 505 is a value (for example, 0) indicating "not used".

In a case where the data area 500 is the data area 431 of FIG. 5 and where the current hypervisor is the hypervisor stored in the upper area 420, the value of the area-in-use flag 505 is the value indicating "not used". On the other hand, in a case where the data area 500 is the data area 431 of FIG. 5 and where the current hypervisor is the hypervisor stored in the lower area 430, the value of the area-in-use flag 505 is the value indicating "used".

In other words, the area-in-use flag 505 is rewritten from the value indicating "not used" to the value indicating "used" when a hypervisor of a certain version changes from the target hypervisor to the current hypervisor as the replacement process proceeds. The area-in-use flag 505 is rewritten from the value indicating "used" to the value indicating "not used" when the hypervisor that has been the current hypervisor changes so as not to be the current hypervisor as the replacement process proceeds.

In the example of FIG. 6, the domain control data 506 is further stored in the area that starts at the address B5 in the data area 500. The domain control data 506 is data used by the hypervisor to control the domains 330a to 330c and is data dynamically rewritten by the hypervisor while the hypervisor is running.

For example, an address space that the OS in the domain 330a recognizes as a physical address space is actually an address space of a virtual machine and is not a physical address space of a real machine. Data (for example, a page table) for translating an address that the OS in the domain 330a recognizes as a physical address into a physical address of the real machine is an example of the domain control data 506. Obviously, there is similar data for the address translation for each of the other domains 330b and 330c, and such data is also included in the domain control data 506.

The hypervisor 320 also performs scheduling, such as allocating the processing time of the real CPU 221 sequentially to the domains 330a to 330c. The domain control data 506 may include one or more parameters for scheduling.

FIG. 7 is a diagram illustrating an example of the code area. Specifically, a code area 600 of FIG. 7 is the code area 422 or 432 of FIG. 5. Addresses C0 to C8 in FIG. 7 are relative addresses in the firmware.

More specifically, when the code area 600 is the code area 422, the addresses of FIG. 7 are relative addresses relative to the address A1 of FIG. 5. When the code area 600 is the code area 432, the addresses of FIG. 7 are relative addresses relative to the address A3 of FIG. 5.

As described in relation to the address map 501 of FIG. 6, the code area 600 includes pieces of code for various processes executed by the hypervisor, The sequential order of the pieces of code illustrated in FIG. 7 provides an example. Depending on the embodiment, the sequential order of the pieces of code may be different from that illustrated in FIG. 7.

In the example of FIG. 7, code 601 of a suspension canceling process is stored in an area that starts at the address C0. The suspension canceling process is a process of issuing the canceling instruction to each of the suspension control units 331a to 331c. The suspension canceling process is executed just after the boot of the hypervisor (i.e., just after the change from the target hypervisor to the current hypervisor).

Code 602 of a waiting process is stored in an area that starts at the address C1. The waiting process is a process of invoking an appropriate process in response to a hypervisor call when the hypervisor call is received from any of the domains 330a to 330c.

Code 603 of preprocessing is stored in an area that starts at the address C2. The preprocessing unit 121 of FIG. 2 is realized by the CPU 221 executing the code 603 of the preprocessing.

Code 604 of a code loading process is stored in an area that starts at the address C3, The code loading unit 122 of FIG. 2 is realized by the CPU 221 executing the code 604 of the code loading process.

Code 605 of a data loading process is stored in an area that starts at the address C4, and code 606 of a data converting process is stored in an area that starts at the address C5. The data updating unit 123 of FIG. 2 is realized by the CPU 221 executing the code 605 of the data loading process and the code 606 of the data converting process.

Code 607 of an access suspending process is stored in an area that starts at the address C6, and code 608 of a firmware switching process is stored in an area that starts at the address C7. For example, in upgrading the hypervisor from version 2 to version 3, the switching unit 124 is realized by the CPU 221 executing the following pieces of code (a1) and (a2).

(a1) The code 607 of the access suspending process of the hypervisor of version 2 and the code 608 of the firmware switching process of the hypervisor of version 2

(a2) The code 601 of the suspension canceling process of the hypervisor of version 3

Although not illustrated in FIG. 7, the code area 600 further includes pieces of code for various other processes executed by the hypervisor in areas in the address range from the address C8. For example, the code area 600 includes code for an appropriate process according to the type of a hypervisor call that the hypervisor receives during execution of the waiting process. The code area 600 also includes code for translation between the address recognized by the OS (i.e., the address of the virtual machine) and the physical address of the real machine as well as code for scheduling among the domains 330a to 330c.

The address map 501 of FIG. 6 includes at least pieces of information indicating the following (b1) to (b8).

(b1) The starting address of the code 601 of the suspension canceling process is C0.
(b2) The starting address of the code 602 of the waiting process is C1.
(b3) The starting address of the code 603 of the preprocessing is C2.
(b4) The starting address of the code 604 of the code loading process is C3.
(b5) The starting address of the code 605 of the data loading process is C4.
(b6) The starting address of the code 606 of the data converting process is C5.
(b7) the starting address of the code 607 of the access suspending process is C6.
(b8) The starting address of the code 608 of the firmware switching process is C7.

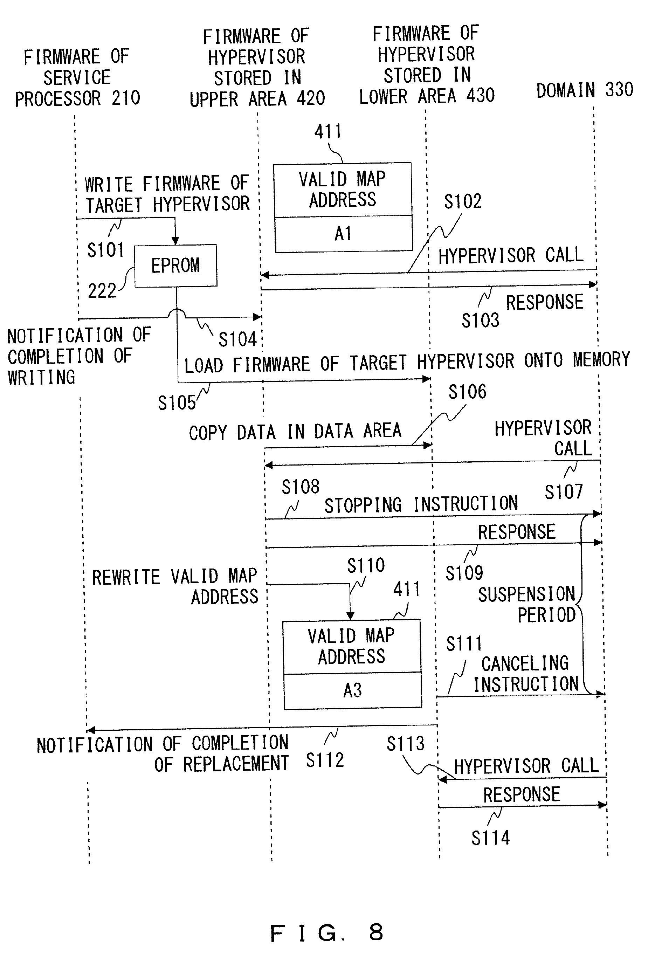

Details of the replacement process will now be described with reference to FIGS. 8 to 13. FIG. 8 is a sequence diagram illustrating an example of replacement of the hypervisor.

The area used as the active area at the start of the operational sequence of FIG. 8 is the upper area 420 of FIG. 5. More specifically, the valid map address 411 of FIG. 5 indicates the starting address A1 of the upper area 420 at the start of the operational sequence of FIG. 8. The domain 330 of FIG. 8 may be any of the domains 330a to 330c of FIG. 4.

In the service processor 210 as the management unit 110, the CPU 211 operates in accordance with the firmware stored in the NOR flash memory 212 in the service processor 210. Assume that the firmware of the target hypervisor is already stored in the NAND flash memory 213 (i.e., the storage unit 111 of FIG. 2) in the service processor 210 at the start of the operational sequence of FIG. 8.

In step S101, the management unit 110 writes the firmware of the target hypervisor stored in the NAND flash memory 213 to the EPROM 222 (i.e., the storage unit 130 of FIG. 2) in the system board 220a.

Meanwhile, the domain 330 does not recognize that the management unit 110 has started the replacement process. Therefore, the domain 330 may invoke a hypervisor call, for example at the timing indicated as step S102 in FIG. 8.

The current hypervisor then operates in accordance with the code 602 of the waiting process in the code area 422 of the upper area 420 and another appropriate piece of code that is not illustrated but that is stored in the code area 422 of the upper area 420. The current hypervisor then returns a response for the hypervisor call to the domain 330 in step S103.

If the writing in step S101 is completed successfully, then in step S104, the management unit 110 notifies the preprocessing unit 121 in the control unit 120 of the completion. Specifically, in the example of FIG. 8, the preprocessing unit 121 is realized by the CPU 221 executing the code 603 of the preprocessing included in the firmware of the current hypervisor stored in the code area 422 of the upper area 420.

Upon the preprocessing unit 121 receiving the notification of the completion, in the next step S105, the code loading unit 122 loads, onto the memory, the firmware of the target hypervisor having been copied to the EPROM 222 (i.e., the storage unit 130 of FIG. 2). Specifically, the code loading unit 122 in step S105 loads the code area in the firmware of the target hypervisor on the EPROM 222 into the code area 432 of the lower area 430, which is the inactive area.

Further in step S106, the data updating unit 123 copies the static data included in the data area in the firmware of the target hypervisor on the EPROM 222 to the data area 431 of the lower area 430, which is the inactive area.

In step S106, the data updating unit 123 further copies, to the data area 431, the dynamic data in the data area 421 of the upper area 420, which is the active area. In step S106, the data updating unit 123 may simply copy the dynamic data or may additionally perform the data format conversion, depending on the version numbers 503 of the data formats for the current hypervisor and the target hypervisor.

Meanwhile, the domain 330 does not recognize that the replacement process is in progress. Therefore, as illustrated for example in step S107 of FIG. 8, the domain 330 may invoke a hypervisor call at the timing significantly close to step S106.

The current hypervisor then receives the hypervisor call in accordance with the code 602 of the waiting process in the code area 422 of the upper area 420. Meanwhile, after the process of step S106 is completed, the switching unit 124 issues a stopping instruction to the domain 330 in step S108. Specifically, the process of step S108 is executed in accordance with the code 607 of the access suspending process in the firmware of the current hypervisor.

The domain 330 that has received the stopping instruction stops invoking a hypervisor call until a canceling instruction, which is an instruction for cancellation of the stopping instruction, is received. In the example of FIG. 8, the domain 330 suspends the hypervisor call(s) during a period indicated as a "suspension period" extending from step S108 to step S111 which is described later.

In other words, the domain 330 does not access the hypervisor during the suspension period. Instead, the domain 330 may store the hypervisor call(s) intended to be invoked in the queue during the suspension period.

Subsequently to the issuance of the stopping instruction in step S108, the switching unit 124 operates in step S109 as follows. That is, for each hypervisor call which is received before the issuance of the stopping instruction and for which a response is not returned yet, the switching unit 124 executes an appropriate process and returns a response to the domain 330. In the example of Fig. 8, the response to the hypervisor call of step S107 is returned in step S109. The process of step S109 is also executed in accordance with the code 607 of the access suspending process in the firmware of the current hypervisor.

In the following step S110, the switching unit 124 rewrites the valid map address 411 with the starting address A3 of the lower area 430, in which the firmware of the target hypervisor is stored. The process of step S110 is executed in accordance with the code 608 of the firmware switching process in the firmware of the current hypervisor.

As a result of step S110, the hypervisor whose firmware is stored in the upper area 420 changes so that it is not the current hypervisor, and the upper area 420 is switched from the active area to the inactive area. Instead, the hypervisor whose firmware is stored in the lower area 430 is switched from the target hypervisor to the current hypervisor, and the lower area 430 is switched from the inactive area to the active area.

In the following step S111, the switching unit 124 issues a canceling instruction. In step S112, the switching unit 124 further notifies the service processor 210 as the management unit 110 of the completion of the replacement of the hypervisor. The processes of steps S111 and S112 are executed in accordance with the code 601 of the suspension canceling process in the code area 432 of the lower area 430.

The domain 330 that has received the canceling instruction resumes invoking hypervisor calls. Specifically, if the queue is not empty, the domain 330 sequentially invokes the hypervisor call(s) stored in the queue. After the queue becomes empty, the domain 330 also invokes hypervisor calls as necessary.

For example, the domain 330 invokes a hypervisor call in step S113. Consequently, the current hypervisor, whose firmware is stored in the lower area 430, executes an appropriate process according to the hypervisor call and returns a response in step S114. In this way, the replacement of the hypervisor is transparent to the domain 330. More specifically, it is recognized by the domain 330 as if the hypervisor just temporarily requested the domain 330 to stop the hypervisor call.

Note that FIG. 8 is an example in which the active area switches from the upper area 420 to the lower area 430 upon replacement of the hypervisor. However, there is obviously a case in which the active area switches from the lower area 430 to the upper area 420 upon replacement of the hypervisor.

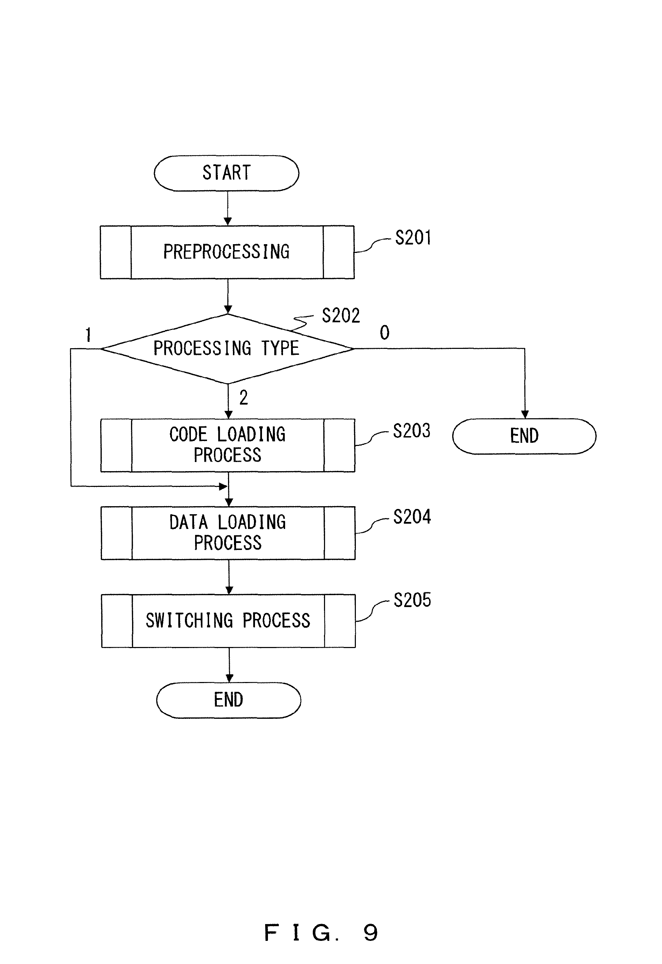

FIG. 9 is a flowchart of the replacement process for replacing the hypervisor. As can be understood from the description so far, the replacement process itself is executed by the hypervisor.

The replacement process of FIG. 9 is started if the following conditions (c1) and (c2) hold true.

(c1) The firmware of the target hypervisor is stored in the storage unit 111 (specifically, for example, the NAND flash memory 213) in the management unit 110.
(c2) It is explicitly or implicitly instructed to start the replacement process.

Various methods make it realizable to read the firmware of the target hypervisor from the outside of the information processing device 100 to the storage unit 111. For example, the firmware of the target hypervisor may be downloaded from a network through the network connection device 260 and then may be stored in the NAND flash memory 213.

Alternatively, the firmware of the target hypervisor may be stored in advance in the storage medium 290. Then, the firmware of the target hypervisor may be read from the storage medium 290 set to the drive device 270 and may be copied to the NAND flash memory 213.

In any case, the condition (c1) holds true when the firmware of the target hypervisor is read into the storage unit 111, An example of the explicit instruction in the condition (c2) is an input from the user (for example, the administrator of the information processing device 100) through the input device 230. An example of the implicit instruction in the condition (c2) is an event that storing the firmware of the target hypervisor in the storage unit 111 is completed.

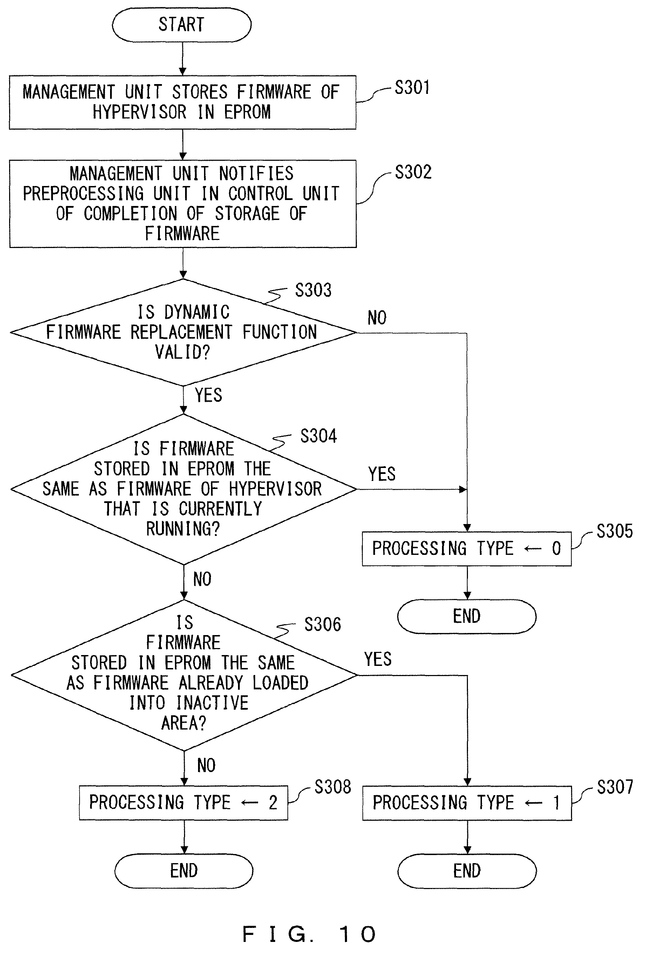

When the conditions (c1) and (c2) hold true, the replacement process of FIG. 9 is started. Upon the replacement process being started, first in step S201, the management unit 110 and the preprocessing unit 121 execute the preprocessing that is illustrated in FIG. 10. Although details are described later with reference to FIG. 10, the preprocessing includes copying from the storage unit 111 to the storage unit 130 (i.e., copying from the NAND flash memory 213 to the EPROM 222), and setting the "processing type" for the flow control.

The value of the processing type is one of (d1) to (d3).

(d1) A value indicating that the control unit 120 is unable to continue the replacement process or it is not necessary to continue the replacement process. Hereinafter, it is assumed that this value is 0 for the convenience of the description.
(d2) A value indicating that it is the case where the control unit 120 continues the replacement process and that the firmware 142 of the target hypervisor remains in the inactive area in the DIMM 140. Hereinafter, it is assumed that this value is 1 for the convenience of the description.
(d3) A value indicating that it is the case where the control unit 120 continues the replacement process and that the firmware 142 of the target hypervisor is not stored in the inactive area in the DIMM 140. Hereinafter, it is assumed that this value is 2 for the convenience of the description.

For example, when the current hypervisor or the target hypervisor does not support the dynamic replacement function, the control unit 120 is unable to continue the replacement process. Therefore, in this case, the value of the processing type is 0. When the same hypervisor as the current hypervisor is designated as the target hypervisor, the control unit 120 does not have to continue the replacement process. Therefore, also in this case, the value of the processing type is 0.

On the other hand, the case in which the control unit 120 continues the replacement process is a case in which it is feasible to continue the replacement process and in which the current hypervisor and the target hypervisor are different from each other. When the control unit 120 continues the replacement process, the value of the processing type is 1 or 2.

For example, if the target hypervisor is a hypervisor that has been running on the information processing device 100 until just before the current hypervisor started to run, the firmware of the target hypervisor remains in the inactive area. Therefore, in this case, the value of the processing type is 1.

More specifically, for example, some kind of defect may be found after the hypervisor is upgraded from version 2 to version 3. As a result, the hypervisor may be downgraded from version 3 to version 2.

In a case where the replacement process of FIG. 9 is executed for downgrading as exemplified above, the current inactive area is an area that was the active area when the hypervisor of version 2 was running. In other words, the firmware of the hypervisor of version 2 that is now the target hypervisor is stored in the current inactive area. Therefore, the value of the processing type is 1.

On the other hand, the firmware of the target hypervisor does not exist on the DIMM 140 in some cases, for example when a hypervisor of version 5 is newly released, and the replacement process of FIG. 9 is executed to upgrade the hypervisor from version 4 to version 5. Therefore, the value of the processing type is 2.

The hypervisor may be downgraded to version 1 for some reason after the hypervisor is upgraded from version 1 to version 2 and then upgraded from version 2 to version 3. In this case, the firmware of the target hypervisor in downgrading from version 3 to version 1 (i.e., the firmware of the hypervisor of version 1) no longer exists on the DIMM 140. Therefore, the value of the processing type is 2.

After the processing type described above is set in the preprocessing in step S201, the preprocessing unit 121 judges whether the value of the processing type is 0, 1, or 2 in the following step S202.

If the value of the processing type is 0, the processes in and after step S203 are not necessary and therefore the replacement process of FIG. 9 is finished. If the value of the processing type is 1, the process proceeds to step S204. If the value of the processing type is 2, the process proceeds to step S203.

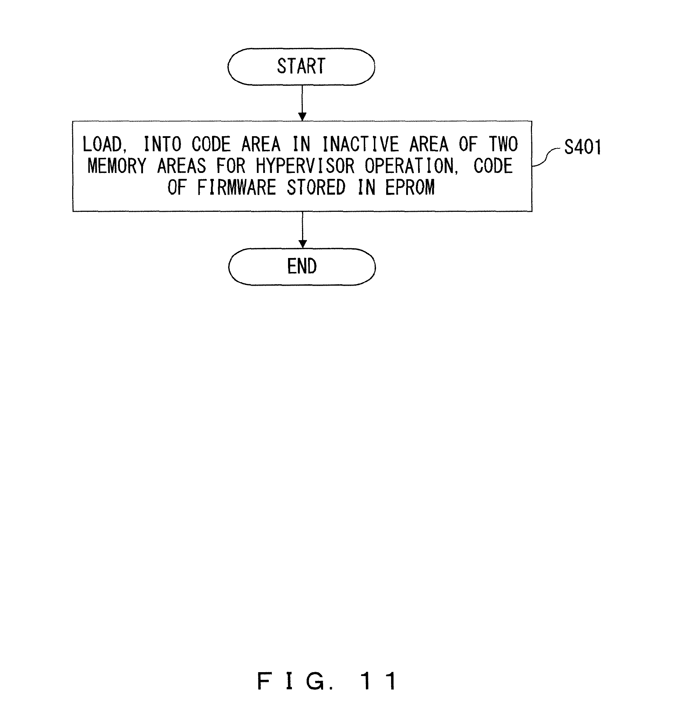

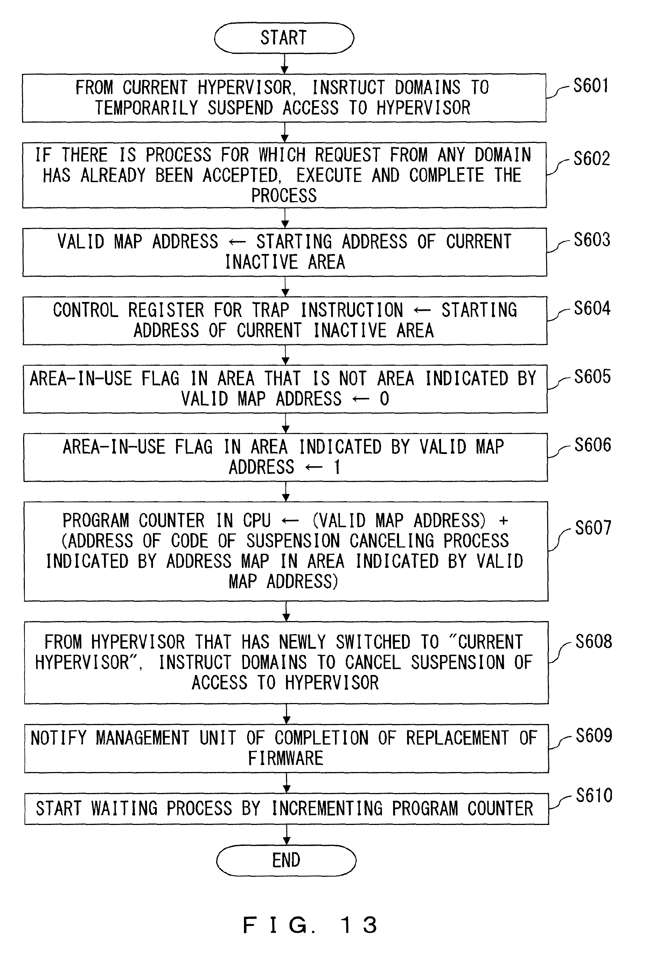

In step S203, the code loading unit 122 executes the code loading process that is illustrated in FIG. 11. In step S204, the data updating unit 123 executes the data loading process that is illustrated in FIG. 12. In the last step S205, the switching unit 124 executes the switching process that is illustrated in FIG. 13, and then the replacement process of FIG. 9 ends.

Steps S101 and S104 of FIG. 8 are part of the preprocessing in step S201 of FIG. 9. The value of the processing type is 2 in the example of FIG. 8. Step S105 of FIG. 8 corresponds to step S203 of FIG. 9, and step S106 of FIG. 8 corresponds to step S204 of FIG. 9. Steps S108 to S112 of FIG. 8 are part of step S205 of FIG. 9. Steps S102, S103, S107, S113, and S114 of FIG. 8 are independent of the replacement process of FIG. 9.

Details of the preprocessing illustrated in step S201 of FIG. 9 will now be described with reference to a flowchart of FIG. 10.

In step S301, the management unit 110 stores, in the storage unit 130 of FIG. 2 (i.e., in the EPROM 222 of FIG. 3), the firmware of the target hypervisor stored in the storage unit 111 (i.e., the NAND flash memory 213 of FIG. 3) in the management unit 110.

Upon completion of the storage in step S301, next in step S302, the management unit 110 notifies the preprocessing unit 121 in the control unit 120 of the completion of the storage of the firmware.

Then in step S303, the preprocessing unit 121 refers to the valid/invalid flag 504 for the dynamic replacement function in the data area 500 of the firmware of the current hypervisor stored in the active area in the DIMM 140. The preprocessing unit 121 refers to the valid map address 411 in the common area 410, and is thereby able to recognize which of the upper area 420 and the lower area 430 is the active area.

The preprocessing unit 121 also refers to the valid/invalid flag 504 for the dynamic replacement function in the data area 500 of the firmware of the target hypervisor stored in the storage unit 130. The preprocessing unit 121 then judges whether the dynamic replacement function is valid or not based on the values of the two valid/invalid flags 504.

If both the valid/invalid flag 504 in the firmware of the current hypervisor and the valid/invalid flag 504 in the firmware of the target hypervisor have a value (for example, 1) indicating "valid", the process proceeds to step S304. On the other hand, if at least one of the valid/invalid flag 504 in the firmware of the current hypervisor and the valid/invalid flag 504 in the firmware of the target hypervisor has a value (for example, 0) indicating "invalid", the process proceeds to step S305.

In step S304, the preprocessing unit 121 judges whether the firmware of the target hypervisor stored in the EPROM 222 is the same as the firmware of the current hypervisor that is currently running.

Specifically, the preprocessing unit 121 first refers to the valid map address 411 in the common area 410 in the area 400 for the hypervisor, and thereby judges which of the upper area 420 and the lower area 430 is the active area. Alternatively, the preprocessing unit 121 may memorize the result of referencing the valid map address 411 in step S303.

If the starting address A1 of the upper area 420 is stored as the valid map address 411, the version number of the current hypervisor is the version number 502 in the data area 421. Conversely, if the starting address A3 of the lower area 430 is stored as the valid map address 411, the version number of the current hypervisor is the version number 502 in the data area 431. In this way, the preprocessing unit 121 recognizes the version number of the current hypervisor.

The preprocessing unit 121 also refers to the version number 502 in the data area 500 of the firmware of the target hypervisor stored in the EPROM 222. The preprocessing unit 121 then compares the version numbers 502 of the current hypervisor and the target hypervisor.

If the two version numbers 502 are equal, there is no need for the replacement because the target hypervisor and the current hypervisor are the same. Therefore, the process proceeds to step S305.

Conversely, if the two version numbers 502 are different, the process proceeds to step S306.

In step S305, the preprocessing unit 121 sets the value of the processing type to 0. Then, the preprocessing of FIG. 10 is finished.

In step S306, the preprocessing unit 121 judges whether the firmware of the hypervisor stored in the EPROM 222 is the same as the firmware of the hypervisor already loaded into the inactive area.

Specifically, the preprocessing unit 121 first refers to the valid map address 411 in the common area 410 in the area 400 for the hypervisor, and thereby judges which of the upper area 420 and the lower area 430 is the inactive area. Since the preprocessing unit 121 has already referred to the valid map address 411, the preprocessing unit 121 may not refer to the valid map address 411 again in step S306 if the result of the reference is stored. The preprocessing unit 121 may judge which of the upper area 420 and the lower area 430 is the inactive area in step S306 in accordance with the result of referencing the valid map address 411 in the past.

If the starting address A1 of the upper area 420 is stored as the valid map address 411, the version number of the hypervisor whose firmware is stored in the inactive area is the version number 502 in the data area 431 of the lower area 430. Conversely, if the starting address A3 of the lower area 430 is stored as the valid map address 411, the version number of the hypervisor whose firmware is stored in the inactive area is the version number 502 in the data area 421 of the upper area 420. In this way, the preprocessing unit 121 recognizes the version number of the firmware of the hypervisor already loaded into the inactive area.

The preprocessing unit 121 also refers to the version number 502 in the data area 500 of the firmware of the target hypervisor stored in the EPROM 222. The preprocessing unit 121 then compares the version numbers 502 of the target hypervisor and the hypervisor already loaded into the inactive area.

If the two version numbers 502 are equal, it is not necessary to copy the firmware of the target hypervisor from the EPROM 222 to the current inactive area. Therefore, the process proceeds to step S307. Conversely, if the two version numbers 502 are different, the process proceeds to step S308.

In step S307, the preprocessing unit 121 sets the value of the processing type to 1. Then, the preprocessing of FIG. 10 is finished.

In step S308, the preprocessing unit 121 sets the value of the processing type to 2. Then, the preprocessing of FIG. 10 is finished.

Details of the code loading process illustrated in step S203 of FIG. 9 will now be described with reference to a flowchart of FIG. 11.

In step S401, the code loading unit 122 loads, into the code area of the inactive area of the two memory areas for the hypervisor operation, the code of the firmware of the target hypervisor stored in the EPROM 222.

Specifically, the code loading unit 122 first refers to the valid map address 411 of FIG. 5, and thereby recognizes which of the upper area 420 and the lower area 430 is the inactive area.

If the valid map address 411 indicates the address A1, the lower area 430 is the inactive area. Therefore, the code loading unit 122 copies the code of the firmware of the target hypervisor stored in the EPROM 222 to the code area 432 in the lower area 430.

Conversely, if the valid map address 411 indicates the address A3, the upper area 420 is the inactive area. Therefore, the code loading unit 122 copies the code of the firmware of the target hypervisor stored in the EPROM 222 to the code area 422 in the upper area 420.

Details of the data loading process illustrated in step S204 of FIG. 9 will now be described with reference to a flowchart of FIG. 12.

In step S501, the data updating unit 123 refers to the value of the processing type set in the preprocessing. If the value of the processing type is the value (specifically, 1) explained in (d2), the process proceeds to step S503. Conversely, if the value of the processing type is the value (specifically, 2) explained in (d3), the process proceeds to step S502.

If the value of the processing type is 1, the firmware of the target hypervisor remains in the inactive area in the DIMM 140. Therefore, it is not necessary to copy the static data included in the data area 500 from the EPROM 222 to the inactive area in the DIMM 224. Therefore, if the processing type is 1, step S502 is skipped.

Conversely, if the value of the processing type is 2, the firmware of the target hypervisor does not exist in the inactive area in the DIMM 140. Therefore, in step S502, the data updating unit 123 copies the static data in the data area 500 of the target hypervisor stored in the EPROM 222 to the data area 500 in the inactive area in the DIMM 224.

Specifically, the data updating unit 123 copies the address map 501, the version number 502 of the hypervisor, the version number 503 of the data format, the valid/invalid flag 504 for the dynamic replacement function, and the area-in-use flag 505 of FIG. 6. Upon completion of the copying in step S502, the process proceeds to step S503.

By referring to the valid map address 411, the data updating unit 123 is able to recognize the starting address of the inactive area (i.e., able to recognize the address where the data is to be copied to).

If the valid map address 411 indicates the address A1, the inactive area is the lower area 430. Therefore, the data updating unit 123 recognizes the starting address A3 of the lower area 430 as the starting address of the inactive area. Conversely, if the valid map address 411 indicates the address A3, the inactive area is the upper area 420. Therefore, the data updating unit 123 recognizes the starting address A1 of the upper area 420 as the starting address of the inactive area.

In step S503, the data updating unit 123 judges whether there is a change in the data format between the current hypervisor and the target hypervisor. More specifically, the data updating unit 123 judges whether the version number 503 of the data format in the data area 421 and the version number 503 of the data format in the data area 431 are equal to each other.

If the two version numbers 503 are equal, the data format is not changed, and therefore the process proceeds to step S504. On the other hand, if the two version numbers 503 are different, the process proceeds to step S505.

In step S504, the data updating unit 123 copies the domain control data 506 in the active area to the inactive area. More specifically, the domain control data 506 is copied to an area which is configured to store the domain control data 506 and which is in the data area 500 in the inactive area.

In a case where the total length of the static data included in the data area 500 is fixed, by adding this fixed length to the starting address of the active area, the data updating unit 123 is able to recognize the starting address of the domain control data 506 that is a target to be copied. Similarly, by adding the fixed length to the starting address of the inactive area, the data updating unit 123 is able to recognize the address to which the domain control data 506 is to be copied.

In a case where the address map 501 includes information indicating the starting address of the domain control data 506, by referring to the address map 501 of the current hypervisor in the active area, the data updating unit 123 is able to recognize the starting address of the target to be copied. Similarly, by referring to the address map 501 of the target hypervisor in the inactive area, the data updating unit 123 is able to recognize the address to which the domain control data 506 is to be copied.

The data loading process of FIG. 12 is finished when the copying in step S504 is completed.

Meanwhile, in step S505, the data updating unit 123 judges whether the version of the data format for the target hypervisor is newer than that for the current hypervisor. Note that step S505 is executed only when there is a difference in the version of the data format between the current hypervisor and the target hypervisor.

When the hypervisor is to be replaced for upgrading it, the version number of the data format for the target hypervisor is newer than the version number of the data format for the current hypervisor. Therefore, the process proceeds from step S505 to step S506.

In contrast, when the hypervisor is to be replaced for downgrading it, the version number of the data format for the current hypervisor is newer than the version number of the data format for the target hypervisor. Therefore, the process proceeds from step S505 to step S507.

In step S506, the data updating unit 123 sets, as the address to jump to, the address of the code 606 of the data converting process in the code area in the inactive area. More specifically, the data updating unit 123 determines to invoke, in step S512 described later, the code 606 of the data converting process in the firmware of the target hypervisor. The process of step S506 is specifically as follows.

When the valid map address 411 indicates the address A1, the lower area 430 is the inactive area. Therefore, in step S506, the data updating unit 123 refers to the address map 501 in the data area 431 in the lower area 430, and thereby recognizes the relative address, which is that in the target firmware, of the code 606 of the data converting process. The data updating unit 123 then adds the recognized relative address and the starting address A3 of the lower area 430, which is the inactive area, and thereby obtains the address to jump to.

On the other hand, when the valid map address 411 indicates the address A3, the upper area 420 is the inactive area. Therefore, in step S506, the data updating unit 123 refers to the address map 501 in the data area 421 in the upper area 420, and thereby recognizes the relative address, which is that in the target firmware, of the code 606 of the data converting process. The data updating unit 123 then adds the recognized relative address and the starting address A1 of the upper area 420, which is the inactive area, and thereby obtains the address to jump to.

When the address to jump to (i.e., the jump-to address) is set, the process proceeds to step S508.

In step S507, the data updating unit 123 sets, as the address to jump to, the address of the code 606 of the data converting process in the code area in the active area. More specifically, the data updating unit 123 determines to invoke, in step S512 described later, the code 606 of the data converting process in the firmware of the current hypervisor. The process of step S507 is specifically as follows.

When the valid map address 411 indicates the address A1, the upper area 420 is the active area. Therefore, in step S507, the data updating unit 123 refers to the address map 501 in the data area 421 in the upper area 420, and thereby recognizes the relative address, which is that in the current firmware, of the code 606 of the data converting process. The data updating unit 123 then adds the recognized relative address and the starting address A1 of the upper area 420, which is the active area, and thereby obtains the address to jump to.

On the other hand, when the valid map address 411 indicates the address A3, the lower area 430 is the active area. Therefore, in step S507, the data updating unit 123 refers to the address map 501 in the data area 431 in the lower area 430, and thereby recognizes the relative address, which is that in the current firmware, of the code 606 of the data converting process. The data updating unit 123 then adds the recognized relative address and the starting address A3 of the lower area 430, which is the active area, and thereby obtains the address to jump to.

When the address to jump to (i.e., the jump-to address) is set, the process proceeds to step S508.

As a result of the above-mentioned step S506 or S507, the absolute address of the code 606 of the data converting process in the area storing the firmware of the hypervisor with the newer version number 503 of the data format is set as the address to jump to. In the present embodiment, the code 606 of the data converting process includes a piece of code for supporting conversion from any older data format and conversion to any older data format.

For example, the following pieces of code (e1) and (e2) are included in the code 606 of the data converting process in the firmware of the hypervisor with the version number 503 of the data format being 2.

(e1) Code for conversion from the data format of version 1 to the data format of version 2
(e2) Code for conversion from the data format of version 2 to the data format of version 1

The following pieces of code (f1) to (f4) are included in the code 606 of the data converting process in the firmware of the hypervisor with the version number 503 of the data format being 3.

(f1) Code for conversion from the data format of version 1 to the data format of version 3
(f2) Code for conversion from the data format of version 3 to the data format of version 1
(f3) Code for conversion from the data format of version 2 to the data format of version 3
(f4) Code for conversion from the data format of version 3 to the data format of version 2

Therefore, the code 606 of the data converting process that starts at the jump-to address, which is set in step S506 or S507, includes a piece of code for conversion from the data format for the current hypervisor to the data format for the target hypervisor.

After the execution of step S506 or S507, a series of processes in steps S508 to S512 are executed. The sequential order of steps S508 to S511 may be changed according to the embodiment.

In step S508, the data updating unit 123 sets, as an input address, the starting address of the domain control data 506 in the active area. The input address herein denotes the starting address of the data to be converted, in other words, an address for specifying input to the data converting process.

As in step S504, the data updating unit 123 is able to acquire the absolute starting address of the domain control data 506 in the active area. Therefore, the data updating unit 123 sets the acquired address as the input address.

In the following step S509, the data updating unit 123 sets, as an output address, the starting address of the domain control data 506 in the inactive area. The output address herein denotes the starting address of an area to which the converted data is to be outputted.

Similarly to step S504, the data updating unit 123 is able to acquire the absolute starting address of the domain control data 506 in the inactive area. Therefore, the data updating unit 123 sets the acquired address as the output address.

In the following step S510, the data updating unit 123 sets, as an input version number, the version number 503 of the data format for the current hypervisor.

The process of step S510 is specifically as follows.

When the valid map address 411 indicates the address A1, the firmware of the current hypervisor is stored in the upper area 420. Therefore, the data updating unit 123 sets the version number 503 of the data format in the data area 421 of the upper area 420 as the input version number in step S510.

On the other hand, when the valid map address 411 indicates the address A3, the firmware of the current hypervisor is stored in the lower area 430. Therefore, the data updating unit 123 sets the version number 503 of the data format in the data area 431 of the lower area 430 as the input version number in step S510.

In the following step S511, the data updating unit 123 further sets, as an output version number, the version number 503 of the data format for the target hypervisor. The process of step S511 is specifically as follows.

When the valid map address 411 indicates the address A1, the firmware of the target hypervisor is stored in the lower area 430. Therefore, the data updating unit 123 sets the version number 503 of the data format in the data area 431 of the lower area 430 as the output version number in step S511.

On the other hand, when the valid map address 411 indicates the address A3, the firmware of the target hypervisor is stored in the upper area 420. Therefore, the data updating unit 123 sets the version number 503 of the data format in the data area 421 of the upper area 420 as the output version number in step S511.

Then in step S512, using the input address, the output address, the input version number, and the output version number as arguments, the data updating unit 123 calls and executes the process at the jump-to address. In other words, the process of step S512 includes a subroutine call to the data converting process and also includes execution of the data converting process. The arguments may be passed through a call stack or a register window depending on the architecture of the information processing device 100.

When the CPU 221 finishes executing the code 606 of the data converting process starting at the jump-to address and control returns from the subroutine of the data converting process upon encountering a return instruction, the process of step S512 is finished. Consequently, the data loading process of FIG. 12 corresponding to step S204 of FIG. 9 is also finished, and the switching process of step S205 is then executed.

For example, the code 605 of the data loading process may include, immediately after the call instruction for calling the subroutine of the data converting process, an unconditional jump instruction for jumping to the starting address of the code 607 of the access suspending process. In other words, this unconditional jump instruction may be located at the return address of the subroutine call in step S512.

In this case, when the CPU 221 finishes executing the code 606 of the data converting process that starts at the jump-to address having been set in step S506 or S507, the program counter in the CPU 221 is updated to a value of the return address. As a result, the CPU 221 executes the above-mentioned unconditional jump instruction and then starts executing the code 607 of the access suspending process in the firmware of the current hypervisor. Control is passed from the data updating unit 123 to the switching unit 124 as exemplified above, and the process proceeds from step S204 to step S205 in FIG. 9.

Details of the switching process illustrated in step S205 of FIG. 9 will now be described with reference to a flowchart of FIG. 13.

In step S601, the switching unit 124 instructs, from the current hypervisor, the domains 330a to 330c to temporarily suspend access to the hypervisor. More specifically, the switching unit 124 issues a stopping instruction to each of the suspension control units 331a to 331c. The switching unit 124 at the time when step S601 is executed is realized by the CPU 221 executing the code 607 of the access suspending process in the firmware of the current hypervisor stored in the active area.

As described, the suspension control units are included in the respective OSs in the embodiment in which only the OSs invoke hypervisor calls. Alternatively, the suspension control unit is included in each of the OSs and the device drivers in the embodiment in which both the OSs and the device drivers invoke hypervisor calls. In either case, the access from the domains 330a to 330c to the current hypervisor is temporarily stopped as a result of issuing the stopping instruction in step S601.

In the following step S602, if there is a process for which a request from any of the domains 330a to 330c has already been accepted, the switching unit 124 executes and completes the process, for which the request has been accepted. For example, if the current hypervisor receives the hypervisor call of step S107 just before the issuance of the stopping instruction in step S108 as illustrated in FIG. 8, the switching unit 124 executes and completes the process for the received hypervisor call.

For example, the hypervisor call received by the current hypervisor from any of the domains 330a to 330c in accordance with the code 602 of the waiting process of FIG. 7 may be temporarily stored in the queue used by the current hypervisor. If there is one or more received hypervisor calls, the switching unit 124 sequentially extracts the one or more hypervisor calls from the queue in step S602, and for each extracted hypervisor call, invokes an appropriate subroutine according to the content of each extracted hypervisor call.

More specifically, the switching unit 124 at the time when step S602 is executed is realized by the CPU 221 executing the following pieces of code (g1) and (g2) in the firmware of the current hypervisor stored in the active area.

(g1) The code 608 of the firmware switching process

(g2) A piece (or pieces) of code of the above-mentioned subroutine (or subroutines) called from the code 608 of the firmware switching process (i.e., code that is in the code area 600 but is not illustrated in FIG. 7)

In step S602, the queue may be empty by chance, or one or a plurality of hypervisor calls may be stored in the queue. When the queue is emptied, the process proceeds to step S603.

Then in step S603, the switching unit 124 sets the starting address of the current inactive area into the valid map address 411 in the common area 410. More specifically, if the current valid map address 411 is the starting address A1 of the upper area 420, the switching unit 124 rewrites the valid map address 411 with the starting address A3 of the lower area 430. Conversely, if the current valid map address 411 is the starting address A3 of the lower area 430, the switching unit 124 rewrites the valid map address 411 with the starting address A1 of the upper area 420.

Then in step S604, the switching unit 124 sets the starting address of the current inactive area into the control register for the trap instruction.

Although the details vary depending on the architecture of the CPU 221, the instruction set of CPU 221 includes a trap instruction for making a transition from an unprivileged mode to a privileged mode. The hypervisor call is implemented using the trap instruction. The argument(s) of the trap instruction may include a number indicating the type of the hypervisor call.

Upon detection of the trap instruction, the CPU 221 of the present embodiment switches the execution mode from the unprivileged mode to the privileged mode. When the CPU 221 detects the trap instruction, the CPU 221 also refers to the above-mentioned special control register for the trap instruction. The CPU 221 then executes a jump to the address set in the register. Depending on the embodiment, the CPU 221 may execute a jump to an address obtained by adding an offset according to the argument of the trap instruction to the address that is set in the register.

Consequently, sequential pieces of code that start at the address to which the jump has just been executed and that are for the processing in the privileged mode are executed. When the CPU 221 detects a return instruction included in the sequential pieces of code, the CPU 221 switches the execution mode from the privileged mode to the unprivileged mode, and the control returns to the address immediately after the address of the trap instruction.

The hypervisor call is implemented using, for example, the trap instruction as described above. Therefore, in step S604, the switching unit 124 sets the starting address of the current inactive area into the above-mentioned control register for the trap instruction, thereby switching the address to jump to when the trap instruction is next detected after the CPU 221 returns to the unprivileged mode. In other words, in step S604, the switching unit 124 sets the jump-to address for the hypervisor call to be called after the switch of the hypervisor. Since the switching unit 124, which is included in the hypervisor, operates in the privileged mode, the switching unit 124 is able to rewrite the value of the above-mentioned special register that is protected in the privileged mode.

Then in the following step S605, the switching unit 124 sets the value of the area-in-use flag 505 in the area that is not the area indicated by the valid map address 411 to the value (for example, 0 in the example of FIG. 13) indicating "not used". In other words, the switching unit 124 rewrites the value of the area-in-use flag 505 in the area that has changed from the active area to the inactive area, in accordance with the change.

For example, when the switching unit 124 rewrites the value of the valid map address 411 from the address A1 to the address A3 in step S603, the switching unit 124 sets, to 0, the value of the area-in-use flag 505 in the data area 421 of the upper area 420, which starts at the address A1. Conversely, when the switching unit 124 rewrites the value of the valid map address 411 from the address A3 to the address A1 in step S603, the switching unit 124 sets, to 0, the value of the area-in-use flag 505 in the data area 431 of the lower area 430, which starts at the address A3.

In step S606, the switching unit 124 further sets the value of the area-in-use flag 505 in the area indicated by the valid map address 411 to the value (for example, 1 in the example of FIG. 13) indicating "used". In other words, the switching unit 124 rewrites the value of the area-in-use flag 505 in the area that has changed from the inactive area to the active area, in accordance with the change.

For example, when the switching unit 124 rewrites the value of the valid map address 411 from the address A1 to the address A3 in step S603, the switching unit 124 sets, to 1, the value of the area-in-use flag 505 in the data area 431 of the lower area 430, which starts at the address A3. Conversely, when the switching unit 124 rewrites the value of the valid map address 411 from the address A3 to the address A1 in step S603, the switching unit 124 sets, to 1, the value of the area-in-use flag 505 in the data area 421 of the upper area 420, which starts at the address A1.

Then in step S607, the switching unit 124 rewrites the value of the program counter in the CPU 221. The process of step S607 is a process of switching the hypervisor by designating an instruction in the firmware of the hypervisor stored in the new active area as the instruction that the CPU 221 is to execute next.

Specifically, the switching unit 124 sets, into the program counter, a sum of the valid map address 411 and the address of the code 601 of the suspension canceling process indicated by the address map 501 in the area indicated by the valid map address 411.

For example, when the valid map address 411 is rewritten from the address A1 to the address A3 in step S603, a sum (A3+C0) of the following addresses (h1) and (h2) is set into the program counter.

 (h1) The starting address A3 of the lower area 430, which has newly switched to the active area
 (h2) The relative address C0 that is the address of the code 601 of the suspension canceling process in the lower area 430 and that is indicated by the address map 501 in the data area 431 of the lower area 430.

On the other hand, when the valid map address 411 is rewritten from the address A3 to the address A1 in step S603, a sum (A1+CO) of the following addresses (i1) and (i2) is set into the program counter.

 (i1) The starting address A1 of the upper area 420, which has newly switched to the active area
 (i2) The relative address C0 that is the address of the code 601 of the suspension canceling process in the upper area 420 and that is indicated by the address map 501 in the data area 421 of the upper area 420.

Although the same reference sign "C0" is used in (h2) and (i2) in accordance with FIG. 7, specific values of the relative address C0 in (h2) and the relative address C0 in (i2) may not be the same. The sequential order of steps S604 to S606 may be arbitrarily changed. The switching unit 124 at the time when steps S603 to S607 are executed is realized by the CPU 221 executing the code 608 of the firmware switching process in the area that the valid map address 411 has indicated until the execution of step S602 inclusive.

The instruction to be executed next by the CPU 221 after the execution of step S607 is an instruction at the address set into the program counter in step S607. In other words, the CPU 221 next starts executing the code 601 of the suspension canceling process in the firmware of the hypervisor that has newly switched to the current hypervisor.

As a result, in step S608, the switching unit 124 instructs, from the hypervisor that has newly switched to the current hypervisor, the domains 330a to 330c to cancel the suspension of access to the hypervisor. More specifically, the switching unit 124 issues the canceling instruction to each of the suspension control units 331a to 331c. The issuance of the canceling instruction in step S608 consequently leads the domains 330a to 330c to invoke hypervisor calls as necessary.

In the following step S609, the switching unit 124 notifies the management unit 110 of the completion of the replacement of the firmware of the hypervisor. The notification in step S609 may be performed through, for example, the SRAM 223.

The switching unit 124 at the time when steps S608 and S609 are executed is realized by the CPU 221 executing the code 601 of the suspension canceling process in the new active area indicated by the valid map address 411 rewritten in step S603.

In the present embodiment, the code 602 of the waiting process exists immediately after the code 601 of the suspension canceling process as illustrated in FIG. 7. Therefore, in the following step S610, the CPU 221 starts executing the code 602 of the waiting process by normally incrementing the program counter. In other words, when the replacement of the firmware of the hypervisor is finished, the hypervisor that has newly switched to the current hypervisor automatically starts the waiting process.

According to the second embodiment described above, it is feasible to replace the hypervisor transparently to the domains 330a to 330c without physically rebooting the CPU 221. More specifically, the replacement of the hypervisor according to the second embodiment does not require the reboot of the CPU 221, and therefore does not cause any service provided by the information processing device 100 to halt.

Therefore, even if the information processing device 100 is used to provide a service whose halt is not preferable, the hypervisor is able to be replaced in a timely manner without being affected by the operation schedule of the service.

Not requiring the reboot of the CPU 221 produces an advantageous effect of improving the availability of the information processing device 100. In addition, upgrading the hypervisor in a timely manner is beneficial in improving the security in some cases for example, when a security hole is found in the current hypervisor. Therefore, it is desirable also from the viewpoint of the security to enable the timely replacement of the hypervisor regardless of the use of the information processing device 100.

Although a plurality of system boards 220a to 220c are illustrated in FIG. 3, the information processing device 100 may include only one system board 220a. Even if the information processing device 100 includes a plurality of system boards 220a to 220c, it is possible to independently execute the replacement of the hypervisor in each system board.

That is to say, according to the second embodiment, it is possible to replace the hypervisor without rebooting the CPU 221 even in the information processing device 100 that is not configured redundantly. In other words, in the second embodiment, it is possible to replace the hypervisor without physically rebooting the CPU 221 as long as there are two areas (i.e., the upper area 420 and the lower area 430 of FIG. 5) in the DIMM 140 (specifically, for example, the DIMM 224).

A defect may be found after a hypervisor of a new version is released. More specifically, a defect of a hypervisor of a new version may be found for the first time during the operation of the information processing device 100 after the hypervisor is actually upgraded.

For example, assume that a hypervisor of version 3 is newly released and that the hypervisor is upgraded from version 2 to version 3 in accordance with the second embodiment in the information processing device 100. Subsequently, the hypervisor of version 3 runs on the information processing device 100.

However, if there is some kind of defect in the hypervisor of version 3, an unexpected error may occur, for example, in any of the domains 330a to 330c. Consequently, the administrator of the information processing device 100 may determine to temporarily downgrade the hypervisor from version 3 to version 2.

According to the second embodiment, the replacement for downgrading the hypervisor is also performed in accordance with the flowcharts of FIGS. 9 to 13, similarly to the replacement for upgrading the hypervisor. That is to say, according to the second embodiment, downgrading as a recovery operation after the discovery of the defect is also executable without rebooting the CPU 221. In other words, even if the recovery operation is necessitated, it is not necessary to halt the service provided by the information processing device 100 for the recovery operation.

Therefore, according to the second embodiment, the adverse effect on the availability of the information processing device 100 is well controlled to a low level even if there is a defect in the hypervisor of a newly released version.

The replacement of the hypervisor according to the second embodiment does not significantly delay the execution of the programs (for example, the OSs and the user application programs) that are running on the domains 330a to 330c. Rather, the delay inherently associated with the replacement of the hypervisor is significantly small.

Specifically, the period during which hypervisor calls are temporarily stopped in the second embodiment is a period from the issuance of the stopping instruction in step S601 of FIG. 13 to the issuance of the canceling instruction in step S608. In the period from the issuance of the stopping instruction to the issuance of the canceling instruction, the processes that cause a delay inherently associated with the replacement of the hypervisor are those of steps S603 to S607.

Each of the processes of steps S603, S605, and S606 is a process for writing, in the DIMM 224, data of some bytes at most. Each of the processes of steps S604 and S607 is a process for updating the value of the register in the CPU 221. Therefore, the time taken for the processes of steps S603 to S607 is significantly short. In other words, the delay inherently associated with the replacement of the hypervisor is significantly small.

The delay caused by the process of step S602 is a delay that occurs regardless of whether the hypervisor is replaced or not. Therefore, this delay is not a delay that is inherently associated with the replacement of the hypervisor. More specifically, regardless of whether the hypervisor is replaced or not, a situation may occur in which it takes a certain amount of time to respond to a newly invoked hypervisor call because one or a plurality of hypervisor calls already exist in the queue in the hypervisor. Therefore, the delay caused by the process of step S602 is not a delay inherently associated with the replacement of the hypervisor.

Another reason that enables the hypervisor to be replaced only with a significantly short delay as described above is that the processes of steps S201 to S204 of FIG. 9 are executed before the issuance of the stopping instruction.

For example, the code loading process of step S203 and the data loading process of step S204 involve memory access corresponding to the size of the firmware of the hypervisor. Therefore, it may take a certain amount of time to execute the processes of steps S203 and S204.

However, when the processes of steps S203 and S204 are executed, the stopping instruction is not issued yet and therefore the domains 330a to 330c are allowed to invoke hypervisor calls. In addition, the current hypervisor may operate in a multithreaded way. More specifically, the current hypervisor is able to receive a hypervisor call(s) and process the received hypervisor call(s) in parallel with the execution of the processes of steps S203 and S204.

Therefore, the domains 330a to 330c are not made to wait for the response to the hypervisor call while the current hypervisor is executing the processes of steps S203 and S204, and only a waiting time according to the state of the queue occurs. In this way, in the second embodiment, the current hypervisor executes the processes of steps S203 and S204, which may take a certain amount of time, before the issuance of the stopping instruction, thereby reducing the delay time that occurs in association with the replacement of the hypervisor.

The sequential order of processes illustrated in FIGS. 9 to 13 provides an example. For example, it is sufficient for the data loading process of step S204 of FIG. 9 to be executed before the start of the execution of the hypervisor that is newly switched to the current hypervisor. More specifically, the data loading process of step S204 may not be executed after steps S202 and S203 as illustrated in FIG. 9, but may be executed before steps S202 and S203.

The following is comparison between the first embodiment, which is illustrated in FIG. 1, and the second embodiment.

In FIG. 1, the hypervisor 1a is the current hypervisor in steps S1 to S3. The input of the replacing instruction as a trigger for transition from step S1 to step S2 in FIG. 1 corresponds, for example, to the explicit instruction that is described in (c2) and that is given in order to start the replacement process of FIG. 9.

Step S2 of FIG. 1 corresponds to the code loading process of FIG. 11, and step S3 of FIG. 1 corresponds to step 5601 of FIG. 13.

The designating information 3 of FIG. 1 corresponds to the valid map address 411 in the second embodiment. In other words, rewriting the designating information 3 in step S4 of FIG. 1 corresponds to rewriting the valid map address 411 in step S603 of FIG. 13.

In step S4 of FIG. 1, the information processing device starts executing the firmware of the hypervisor 1b in accordance with the rewriting of the designating information 3. The switch from the hypervisor 1a to the hypervisor 1b in step S4 may be realized by, more specifically, the processes as in steps S604 to S607 of FIG 13, for example.

The issuance of the canceling instruction in step S5 of FIG. 1 corresponds to step S608 of FIG. 13.

A third embodiment will now be described with reference to FIGS. 14 and 15. Common points with the second embodiment will not be repeated.

The difference between the second and third embodiments lies in that physically different two memory modules are used in the third embodiment in place of the DIMM 224, which is physically single as in FIG. 3. For example, the system board 220a of FIG. 3 is modified in the third embodiment so as to include two memory modules and a memory module switch controlling circuit, instead of the single DIMM 224. In other words, in the third embodiment, the two memory modules are used in place of the DIMM 140 in FIG. 2, and the firmware 141 of the current hypervisor and the firmware 142 of the target hypervisor are stored in the two physically different memory modules.

FIG. 14 is a diagram explaining memory allocation related to the firmware of the hypervisor according to the third embodiment. FIG. 14 illustrates an address space 700 recognized by the CPU 221 of FIG. 3 operating as the control unit 120 of FIG. 2. FIG. 14 also illustrates two DIMMs, namely, DIMMs 710 and 720.

The address space 700 recognized by the CPU 221 includes an active area 701 and an inactive area 702. The memory module switch controlling circuit maps the physical memory space of one of the DIMMs 710 and 720 into the active area 701 and maps the physical memory space of the other into the inactive area 702.

The active area 701 is an area that starts at an address D0, and more specifically, the active area 701 includes a data area 703 that starts at the address D0 and a code area 704 that starts at an address D1. The inactive area 702 is an area that starts at an address D2, and more specifically, the inactive area 702 includes a data area 705 that starts at the address D2 and a code area 706 that starts at an address D3. The addresses D0 to D4 illustrated in FIG. 14 are fixed addresses in the address space 700, which is recognized by the CPU 221.

The DIMM 710 includes a data area 711 that starts at an address E0 and a code area 712 that starts at an address E1. The DIMM 720 includes a data area 721 that starts at the address E0 and a code area 722 that starts at the address E1. The addresses E0 to E2 illustrated in FIG. 14 are fixed physical addresses in the DIMMs.

The memory module switch controlling circuit, which is not illustrated in the drawings, switches the DIMM to be mapped into the active area 701.

For the convenience of the following description, let a "first state" be a state in which the memory module switch controlling circuit maps the DIMM 710 into the active area 701 and maps the DIMM 720 into the inactive area 702. More specifically, physical entities of the data area 703 and the code area 704 in the address space 700, which is recognized by the CPU 221, in the first state are the data area 711 and the code area 712 on the DIMM 710. Physical entities of the data area 705 and the code area 706 in the address space 700, which is recognized by the CPU 221, in the first state are the data area 721 and the code area 722 on the DIMM 720.

For the convenience of the following description, let a "second state" be a state in which the memory module switch controlling circuit maps the DIMM 720 into the active area 701 and maps the DIMM 710 into the inactive area 702. More specifically, physical entities of the data area 703 and the code area 704 in the address space 700, which is recognized by the CPU 221, in the second state are the data area 721 and the code area 722 on the DIMM 720. Physical entities of the data area 705 and the code area 706 in the address space 700, which is recognized by the CPU 221, in the second state are the data area 711 and the code area 712 on the DIMM 710.

As can be understood from the description above, the data areas illustrated in FIG. 14 are the same in size, and the code areas illustrated in FIG. 14 are the same in size, in the third embodiment. In other words, the following equations (1) and (2) hold true.

$$D1-D0=D3-D2=E1-E0 \quad (1)$$

$$D2-D1=D4-D3=E2-E1 \quad (2)$$

Details of the data areas illustrated in FIG. 14 are similar to those in FIG. 6. Although details of the code areas illustrated in FIG. 14 are similar to those in FIG. 7, there are some differences. The differences will be described later with reference to FIG. 15.

The memory module switch controlling circuit, which is not illustrated in the drawings, switches between the first state and the second state every time a switch control signal is asserted.

As a result of the switch from the first state to the second state, the hypervisor whose firmware is physically stored in the DIMM 710 changes from the "current hypervisor" to the "hypervisor used in the latest past". Meanwhile, as a result of the switch from the first state to the second state, the hypervisor whose firmware is physically stored in the DIMM 720 changes from the "target hypervisor" to the "current hypervisor".

Conversely, as a result of the switch from the second state to the first state, the hypervisor whose firmware is physically stored in the DIMM 710 changes from the "target hypervisor" to the "current hypervisor". Meanwhile, as a result of the switch from the second state to the first state, the hypervisor whose firmware is physically stored in the DIMM 720 changes from the "current hypervisor" to the "hypervisor used in the latest past".

The CPU 221 recognizes the hypervisor whose firmware is stored in the active area 701 as the current hypervisor in both the first and second states.

The CPU 221 executes memory access (specifically, a load instruction, a store instruction, etc.) by specifying an address in the address space 700, not recognizing which of the DIMMs 710 and 720 is mapped into the active area 701. More specifically, the address outputted by the CPU 221 to the address bus is the address in the address space 700. The memory module switch controlling circuit converts the address outputted from the CPU 221 to the address of the DIMM 710 or 720 in accordance with whether the current state is the first state or the second state, and thereby realizes memory access to the DIMM 710 or 720.

The following is a description of the active area 701 and the current hypervisor from another viewpoint.

An instruction fetch address for the hypervisor is limited to an address in the code area 704 in the active area 701 in the address space 700. More specifically, any address in the code area 706 in the inactive area 702 is not specified as an instruction fetch address, although may be specified as an argument address of a store instruction which is for copying the code of the firmware.

As described, in the memory access, it is not necessary for the CPU 221 to recognize whether the current state is the first state or the second state, and it is sufficient for the CPU 221 to simply specify the address in the address space 700. Meanwhile, the CPU 221 is also able to instruct the memory module switch controlling circuit to switch between the first state and the second state.

Specifically, the CPU 221 outputs a switch control signal to the memory module switch controlling circuit, thereby instructing the memory module switch controlling circuit to switch the state. If the current state is the first state, the memory module switch controlling circuit switches the first state to the second state upon receipt of the switch control signal. If the current state is the second state, the memory module switch controlling circuit switches the second state to the first state upon receipt of the switch control signal.

As is clear from the description so far, the information that corresponds to the designating information 3 of FIG. 1 and that is used in the third embodiment is information that is managed by the memory module switch controlling circuit and that indicates whether the current state is the first state or the second state. Specifically, the designating information 3 may be stored in a storage device (such as a register or a flip-flop) in the memory module switch controlling circuit, depending on the circuit configuration of the memory module switch controlling circuit. Alternatively, the designating information 3 may be expressed by the circuit state, such as whether a particular transistor in the memory module switch controlling circuit is turned on or turned off.

Details of the replacement process in the third embodiment will now be described. Since the replacement process in the third embodiment is similar to the replacement process of FIG. 9 in the second embodiment, differences will be mainly described.

The starting address of the active area recognized by the CPU 221, which realizes the control unit 120, is variable in the second embodiment, and specifically, switches between the addresses A1 and A3 of FIG. 5. However, the starting address of the active area 701 recognized by the CPU 221 is fixed to the address D0 in the third embodiment.

Therefore, the valid map address 411 as in FIG. 5 is omissible in the third embodiment. Even if there is no valid map address 411, the components in the control unit 120 realized by the CPU 221 executing the firmware of the hypervisor is able to recognize the fixed starting addresses D0 and D2 of the active area 701 and the inactive area 702, respectively.

Therefore, reference to the valid map address 411 is omitted and rewriting the valid map address 411 is also omitted in the third embodiment. However, for the rest, the processes of FIGS. 9 to 12 are similarly performed in the third embodiment.

On the other hand, the switching process of FIG. 13 corresponding to step S205 of FIG. 9 is modified as in FIG. 15 in the third embodiment. Hereinafter, the switching process in the third embodiment will be described with reference to a flowchart of FIG. 15.

Steps S701 and S702 are similar to steps S601 and S602 of FIG. 13.

Specifically, in step S701, the switching unit 124 instructs, from the current hypervisor, the domains 330a to 330c to temporarily suspend access to the hypervisor. The switching unit 124 at the time when step S701 is executed is realized by the CPU 221 executing the code 607 of the access suspending process in the code area 704 in the active area 701.

Then in step S702, if there is a process for which a request from any of the domains 330a to 330c has already been accepted, the switching unit 124 executes and completes the process, for which the request has been accepted. The switching unit 124 at the time when step S702 is executed is realized by the CPU 221 executing the above-mentioned pieces of code (g1) and (g2) in the code area 704 in the active area 701.

As described, the starting address D0 of the active area 701 is fixed in the third embodiment. Therefore, the processes such as steps S603 and S604 of FIG. 13 are not necessary in the third embodiment even if the hypervisor is to be switched. Therefore, the process proceeds to step S703 after steps S701 and S702 are executed.

Then in step S703, the switching unit 124 sets the value of the area-in-use flag 505 in the data area 703 of the active area 701 to the value (for example, 0 in the example of FIG. 15) indicating "not used". More specifically, the switching unit 124 rewrites the value of the area-in-use flag 505 in the DIMM, which is to be switched from the state of being mapped into the active area 701 to the state of being mapped into the inactive area 702, in accordance with the switch.

Specifically, the switching unit 124 executes a store instruction for which the address (D0+84) in the address space 700 is specified, thereby realizing the rewriting in step S703. The memory module switch controlling circuit converts the specified address (D0+84) to the physical address (E0+84) of the DIMM 710 in the first state and to the physical address (E0+84) of the DIMM 720 in the second state.

The switching unit 124 at the time when step S703 is executed is realized by the CPU 221 executing the code 608 of the firmware switching process in the code area 704 of the active area 701.

In the following step S704, the switching unit 124 sets the value of the area-in-use flag 505 in the data area 705 of the inactive area 702 to the value (for example, 1 in the example of FIG. 15) indicating "used". More specifically, the switching unit 124 rewrites the value of the area-in-use flag 505 in the DIMM, which is to be switched from the state of being mapped into the inactive area 702 to the state of being mapped into the active area 701, in accordance with the switch.

Specifically, the switching unit 124 executes a store instruction for which the address (D2+B4) in the address space 700 is specified, thereby realizing the rewriting in step S704. The memory module switch controlling circuit converts the specified address (D2+B4) to the physical address (E0+84) of the DIMM 720 in the first state and to the physical address (E0+84) of the DIMM 710 in the second state.

The switching unit 124 at the time when step S704 is executed is also realized by the CPU 221 executing the code 608 of the firmware switching process in the code area 704 of the active area 701.

In the following step S705, the switching unit 124 outputs a switch control signal, thereby instructing the memory module switch controlling circuit to switch the DIMM. In relation to step S705 and the following step S706, details of the code area in the third embodiment may be different from those in FIG. 7. An example of the details of the code area in the third embodiment will be described below.

The instruction fetch addresses from which instructions are fetched while the CPU 221 executes the firmware of the current hypervisor are the addresses in the code area 704 of the active area 701 in the address space 700, as described above.

If the current state is the first state, the instructions are physically fetched from the code area 712 of the DIMM 710. Conversely, if the current state is the second state, the instructions are physically fetched from the code area 722 of the DIMM 720. Note that the process of converting the address in the address space 700 to the physical address of the DIMM 710 or 720 is executed by the memory module switch controlling circuit.

Meanwhile, when the memory module switch controlling circuit executes the switch between the first state and the second state, the physical memory area mapped into the code area 704 of the active area 701 is switched from the code area 712 to the code area 722, or vice versa. Therefore, the physical address corresponding to the instruction fetch address, which is specified by using the address in the address space 700, also switches to the physical address of the other DIMM.

Therefore, the details of the code area may be changed, for example, as follows in the third embodiment. In FIG. 7, the code 601 of the suspension canceling process is located at the top of the code area 600, and the code 608 of the firmware switching process starts at the relative address C7. However, part of the code 608 of the firmware switching process (specifically, instructions related to steps S705 and S706) may be located at the top of the code area in the third embodiment.

The top of the code area is one of the specific examples of a fixed relative address in the code area. It is sufficient that the instructions related to steps S705 and S706 are located at predetermined positions in the code area and it is not necessary for these instructions to be located at the top.

For example, part of the code 608 of the firmware switching process may be located, as in FIG. 7, at a location other than the top of the code area, and an unconditional jump instruction for jumping to the top of the code area may be located immediately after the store instruction for step S704. Since the starting address of the code area of the firmware of the current hypervisor is the fixed address D1 of FIG. 14, the address to jump to is the fixed address D1.

The instructions related to steps S705 and S706 may be located at the top of the code area. In other words, one or more instructions for outputting the switch control signal to the memory module switch controlling circuit and one or more instructions for the following step S706 may be located at the top of the code area, and the code 601 of the suspension canceling process of FIG. 7 may follow these instructions.

According to the sequential order of the instructions as described above, by using the fixed address D1, the instruction fetch address for the firmware of the current hypervisor is aligned with that for the firmware of the target hypervisor. Therefore, the switch of the hypervisor is realized as follows, and the process proceeds from step S705 to step S706.

For the convenience of the description, assume that the first state is switched to the second state in step S705. More specifically, assume that the memory module switch controlling circuit switches the DIMM mapped into the active area 701 from the DIMM 710 to the DIMM 720 in response to the instruction from the switching unit 124 in step S705.

After the execution of step S705, the program counter in the CPU 221 is incremented as usual. Therefore, the next instruction fetch address is the address of the instruction for step S706 located immediately after the instruction for step S705. However, the physical address corresponding to the instruction fetch address changes from the address in the code area 712 of the DIMM 710 to the address in the code area 722 of the DIMM 720 after the switch in step S705.

Assume that the instructions are ordered in the order described above (i.e., the instructions for steps S705 and S706 are located at the top of the code area) in the firmware of the hypervisor of any version. In other words, assume that the instructions for steps S705 and S706 are located at certain fixed addresses in the firmware of the hypervisor of any version.

Consequently, the physical address corresponding to the address indicated by the program counter just after the execution of step S705 is the address of the instruction for step S706 in the code area 722 of the DIMM 720.

In other words, the instruction for step S706 in the firmware of the hypervisor that has newly switched to the current hypervisor is fetched just after step S705. As a result, the switching unit 124 is realized in step S706 by the CPU 221 executing the one or more instructions for step S706 in the firmware stored in the DIMM 720, which is newly mapped into the active area 701. In other words, the switching unit 124 at the time when step S706 is executed is realized by the hypervisor that has newly switched to the current hypervisor.

Although the case in which the first state is switched to the second state in step S705 has been described as an example for the convenience of the description, it is obvious that the process appropriately proceeds to step S706 in a similar manner when the second state is switched to the first state.

Then in step S706, the switching unit 124 rewrites the value of the program counter in the CPU 221. Specifically, the switching unit 124 sets a sum of the following addresses (j1) and (j2) into the program counter in step S706.

(j1) The starting address D0 of the active area 701
(j2) The relative address which is relative to the address D0 and which is the starting address of the code 601 of the suspension canceling process in the code area 704 of the active area 701 (i.e., the relative address of the code 601 of the suspension canceling process indicated by the address map 501 in the data area 703 of the active area 701).

More specifically, the process of step S706 includes execution of a jump instruction. Therefore, the CPU 221 next executes the code 601 of the suspension canceling process located at the jump-to address in accordance with the program counter set in step S706. In other words, in step S707 that follows step S706, the CPU 221 starts executing the code 601 of the suspension canceling process in the firmware of the hypervisor that has newly switched to the current hypervisor in step S705.

As a result, in step S707, the switching unit 124 instructs, from the hypervisor that has newly switched to the current hypervisor, the domains 330a to 330c to cancel the suspension of access to the hypervisor.

In the following step S708, the switching unit 124 notifies the management unit 110 of the completion of the replacement of the firmware of the hypervisor.

The switching unit 124 at the time when steps S707 and S708 are executed is realized by the CPU 221 executing the code 601 of the suspension canceling process stored in the DIMM that is newly mapped into the active area 701 as a result of the switch in step S705.

Also in the third embodiment, the code 602 of the waiting process exists immediately after the code 601 of the suspension canceling process as in FIG. 7. Therefore, in the following step S709, the CPU 221 starts executing the code 602 of the waiting process by normally incrementing the program counter. In other words, the hypervisor that has newly switched to the current hypervisor automatically starts the waiting process when the replacement of the firmware of the hypervisor is finished.

The details of the above-described steps S707 to S709 are similar to those of steps S608 to S610 in FIG. 13.

The third embodiment described above has, for example, the following advantageous effects similar to those in the second embodiment.

First, it is feasible to replace the hypervisor transparently to the domains 330a to 330c without physically rebooting the CPU 221. Therefore, the hypervisor is able to be replaced in a timely manner without halting any service provided by the information processing device 100.

Secondly, the delay inherently caused by the replacement of the hypervisor is significantly small.

Thirdly, the replacement for downgrading the hypervisor is able to be performed similarly to the replacement for upgrading the hypervisor. Therefore, even if the hypervisor is downgraded for a recovery operation that is necessitated by some kind of defect, it is not necessary to halt the service provided by the information processing device 100 for the recovery operation, and a quick recovery is possible.

The present invention is not limited to the above-mentioned embodiments. Although some modifications are described above, the above-mentioned embodiments may be further modified in various ways, for example, from the following viewpoints. The above-mentioned embodiments and the following various modifications may be arbitrarily combined as long as they do not contradict each other.

When the replacement process of FIG. 9 is executed to restore the hypervisor of a version used before, some steps may be skipped depending on the embodiment. A specific example of such skip will be described below.

The process of restoring the hypervisor of the version used before may be a downgrading process or may be an upgrading process, as exemplified in the following processes (k1) and (k2).

(k1) A process of restoring version 1 from version 2 after upgrading the hypervisor from version 1 to version 2 (i.e., the downgrading process)
(k2) A process of restoring version 3 from version 2 after downgrading the hypervisor from version 3 to version 2 (i.e., the upgrading process)

As described, the instruction for the start of the replacement process may be an input from the input device 230. For the convenience of the description, let a "starting instruction" be the instruction for the start of the replacement process of FIG. 9 or of the replacement process in which some steps are skipped.

There may be only one type of the starting instruction, namely, an instruction for the start of the replacement process of FIG. 9 (hereinafter, this instruction is called a "replacing instruction" for convenience). Alternatively, there may be two types of the starting instruction, namely, the replacing instruction and an instruction for the start of the replacement process in which some steps are omitted (hereinafter, the latter type of the starting instruction is called a "recovering instruction" for convenience).

If only the replacing instruction is used as the starting instruction, the input of the replacing instruction is, for example, press of a particular button or input of a particular command. Triggered by the input of the replacing instruction, the management unit 110 and the control unit 120 execute the replacement process of FIG. 9 as described above. The replacement process of FIG. 9 is a general process that is applicable regardless of the version of the current hypervisor and that of the target hypervisor. Therefore, there may be only one type of the starting instruction, namely, the replacing instruction.

However, there may be two types of the starting instruction, namely, the replacing instruction and the recovering instruction. In this case, the management unit 110 and the control unit 120 execute the replacement process of FIG. 9 or execute the replacement process with some steps skipped, depending on the type of the input from the input device 230.

Specifically, the recovering instruction is an instruction for instructing the information processing device 100 to execute the replacement process, in which some steps are skipped, in order to restore the hypervisor of the version used before. In other words, the recovering instruction is an instruction for replacing the current hypervisor with the hypervisor whose firmware remains in the inactive area, which is included in the DIMM 224 or in the address space 700.

The management unit 110 may judge the type of the starting instruction in accordance with, for example, the following matters (11), (12), or (13).

> (11) Which one of two particular buttons is pressed?
> (12) Which one of two particular commands is inputted?
> (13) How is/are the argument(s) specified for one particular command?

If the inputted starting instruction is the replacing instruction, the management unit 110 starts the replacement process of FIG. 9. Conversely, if the inputted starting instruction is the recovering instruction, the management unit 110 notifies the preprocessing unit 121 in the control unit 120 that the recovering instruction is inputted.

The target hypervisor in the case where the recovering instruction is inputted is the hypervisor whose firmware is stored in the inactive area, which is included in the DIMM 224 or in the address space 700. Therefore, when receiving the notification that the recovering instruction is inputted, the preprocessing unit 121 skips steps S301, S302, S304, S306, and S308 in the preprocessing of FIG. 10.

More specifically, the preprocessing unit 121 executes the judgment of step S303 upon receipt of the notification of the input of the recovering instruction from the management unit 110. If the dynamic firmware replacement function is invalid, the preprocessing unit 121 then sets the processing type to 0 in step S305 and ends the preprocessing. Conversely, if the dynamic firmware replacement function is valid, the preprocessing unit 121 then sets the processing type to 1 in step S307 and ends the preprocessing.

When the recovering instruction is inputted, the processing type is 0 or 1 as described above and therefore step S203 of FIG. 9 (i.e., the code loading process of FIG. 11) is not executed. If the processing type is 1, the data loading process of FIG. 12 corresponding to step S204 and the switching process of FIG. 13 or 15 corresponding to step S205 are executed, but steps S501 and S502 in the data loading process are skipped.

In this way, some steps are omissible in the process of restoring the hypervisor whose firmware remains in the inactive area. Therefore, the recovering instruction may be used as described above in order to explicitly notify the control unit 120 that there are some omissible steps.

The process of restoring the hypervisor whose firmware remains in the inactive area may be realized by the above-exemplified explicit recovering instruction and the above-exemplified replacement process with some steps skipped, but is also able to be equally realized by the replacement process of FIG. 9. More specifically, if the firmware of the target hypervisor stored in the storage unit 130 of FIG. 2 is the same as the firmware of the hypervisor remaining in the inactive area, it is possible to regard the replacing instruction as an implicit recovering instruction.

The explicit or implicit recovering instruction as described above is obviously also applicable to the first embodiment of FIG. 1. For example, the explicit or implicit recovering instruction may be inputted to the information processing device, which is described in relation to FIG. 1, after the execution of steps S1 to S5 of Fig. 1. In other words, this recovering instruction is an instruction for recovering the hypervisor 1a from the hypervisor 1b.

Triggered by the input of the recovering instruction, the information processing device then issues, from the hypervisor 1b this time, a new stopping instruction to each of the OSs 2a and 2b, which are the callers of the hypervisor calls. Then, the information processing device rewrites the designating information 3 from the value designating the memory area storing the firmware of the hypervisor 1b to the value designating the memory area storing the firmware of the hypervisor 1a.

The information processing device starts execution of the hypervisor 1a again in response to the rewriting of the designating information 3. The information processing device then issues, from the hypervisor 1a to each of the OSs 2a and 2b, a new canceling instruction for canceling the above-described new stopping instruction.

In this way, triggered by the input of the recovering instruction, the information processing device is able to recover the hypervisor 1a from the hypervisor 1b by executing a process in which the hypervisors 1a and 1b are reverse to those in steps S3 to S5.

The information processing device described in relation to FIG. 1 may include the address translation circuit as described above, and the designating information 3 may be stored in the address translation circuit. Similarly, the information processing device 100 of the second embodiment may be modified so as to include an address translation circuit.

For example, the information processing device 100 may include the address translation circuit between the CPU 221 and the DIMM 224. The address translation circuit converts an address outputted by the CPU 221 to the address bus to different physical addresses according to the cases. Specifically, the following address translation may be performed, for example.

For example, the CPU 221 may recognize the address space 700 as in FIG. 14. Meanwhile, two physical memory areas in the single DIMM 224 may be used in place of the two DIMMs 710 and 720 in FIG. 14. More specifically, the address translation circuit may map one of the two physical memory areas within the DIMM 224 into the active area 701, and may map the other into the inactive area 702.

In other words, in accordance with the switch of the hypervisor, the address translation circuit changes the offset values that are used for the address translation and that respectively correspond to the two physical memory areas in the DIMM 224. The address translation circuit may include registers to hold the offset values. The offset values provide a specific example of the designating information 3.

In the replacement process according to the embodiment using the address translation circuit as described above, the switch between the DIMMs performed by the memory module switch controlling circuit in the third embodiment is modified so that the address translation circuit rewrites the two offset values.

Before being stored in the DIMM 224, the firmware of the hypervisor may be temporarily stored in another storage device or may be transmitted over the network.

For example, the firmware of the hypervisor may be copied from the NAND flash memory 213 of the service processor 210 to the EPROM 222 and then may be copied from the EPROM 222 to the inactive area in the DIMM 224 as described above.

In another way, the DIMM 224 may further include a predetermined area for temporarily storing the firmware of the hypervisor (this predetermined area is called a "temporary storage area" for convenience) in addition to the upper area 420 and the lower area 430. The temporary storage area may be used in place of the EPROM 222.

In yet another way, the firmware of the hypervisor may be stored in the storage medium 290 and may then be provided. The firmware of the hypervisor may be read by the drive device 270 from the storage medium 290 and may then be copied to the DIMM 224. In yet another way, the firmware of the hypervisor may be downloaded from the network through the network connection device 260 and may then be copied to the DIMM 224.

When the information processing device 100 acquires the firmware of the hypervisor from the storage medium 290 or from the network, the firmware of the hypervisor may be temporarily copied to the storage device 250 and may then be copied from the storage device 250 to the DIMM 224.

Instead of the CPU 211 of the service processor 210 of FIG. 3, the CPU 221 on the system board 220a may realize the management unit 110 of FIG. 2.

Although the data area precedes the code area in FIGS. 5 and 14, the sequential order of the data area and the code area may be reversed. The data area and the code area may not be contiguous depending on the embodiment. The data area may be divided into a first area for static data and a second area for dynamic data, and the first area and the second area may not be contiguous.

Each of the data area and the code area may be a fixed-length area that is allowed to include padding or may be a variable-length area. When one or both of the data area and the code area are of variable length, information indicating the lengths of the data area and the code area may be included, for example, in the address map 501 in the data area.

The hypervisor replacing method in any embodiment described above is a method that the information processing device is able to execute regardless of whether the information processing device is redundantly configured or not.

According to the hypervisor replacing method of any embodiment described above, the information processing device that is executing the firmware of a first hypervisor is allowed to continue to operate and does not have to halt. In other words, it is possible to replace the firmware of the first hypervisor with the firmware of a second hypervisor and to cause the information processing device to execute the firmware of the second hypervisor, without halting the information processing device.

## Claims

1.  A hypervisor replacing method executed by an information processing device, the hypervisor replacing method comprising:

    storing, when the information processing device executes firmware of a first hypervisor stored in a first memory area, firmware of a second hypervisor into a second memory area different from the first memory area;
    issuing, from the first hypervisor, a stopping instruction that instructs a caller of a hypervisor call to stop issuing a new hypervisor call;
    rewriting designating information from a first value to a second value wherein the designating information designates a memory area storing firmware of a hypervisor executed by the information processing device, the first value designates the first memory area, and the second value designates the second memory area;
    starting execution of the firmware of the second hypervisor in response to the rewriting of the designating information; and
    issuing, from the second hypervisor to the caller, a canceling instruction that cancels the stopping instruction.

2.  The hypervisor replacing method according to claim 1, further comprising executing a data loading process before the starting the execution of the firmware of the second hypervisor wherein the data loading process is a process of storing, into the second memory area, particular information that is stored in the first memory area and that is used by the first hypervisor.

3.  The hypervisor replacing method according to claim 2, wherein when a first format for the particular information and a second format for information used by the second hypervisor are different, the data loading process includes a format conversion process of converting the particular information from the first format to the second format.

4. The hypervisor replacing method according to claim 3, wherein
a version of the second hypervisor is newer than a version of the first hypervisor,
the firmware of the second hypervisor includes an instruction for a conversion from the first format to the second format, and
the information processing device executes the format conversion process by calling the instruction in the second memory area from the first hypervisor.

5. The hypervisor replacing method according to claim 3, wherein
a version of the first hypervisor is newer than a version of the second hypervisor,
the firmware of the first hypervisor includes an instruction for the format conversion process, and the information processing device executes the format conversion process in accordance with the instruction.

6. The hypervisor replacing method according to any one of claims 1 to 5, further comprising:

receiving a recovering instruction that instructs the information processing device to recover the first hypervisor from the second hypervisor;
issuing, from the second hypervisor, a new stopping instruction that instructs the caller to stop issuing a new hypervisor call;
rewriting the designating information from the second value to the first value;
starting execution of the firmware of the first hypervisor in response to the rewriting of the designating information; and
issuing, from the first hypervisor to the caller, a new canceling instruction that cancels the new stopping instruction.

7. An information processing device comprising:

one or more memory modules; and
a control unit for executing firmware of a hypervisor stored in a memory area designated by designating information that designates one of memory areas in the one or more memory modules, and arranged to:

when the designating information designates a first memory area storing firmware of a first hypervisor, the control unit, store firmware of a second hypervisor into a second memory area different from the first memory area,
issue a stopping instruction that instructs a caller of a hypervisor call to stop issuing a new hypervisor call,
rewrite the designating information from a first value that designates the first memory area to a second value that designates the second memory area,
start execution of the firmware of the second hypervisor, and
issue, from the second hypervisor to the caller, a canceling instruction that cancels the stopping instruction.

8. The information processing device according to claim 7, wherein the control unit is further arranged to store, into the second memory area, particular information that is stored in the first memory area and that is used by the first hypervisor, before starting the execution of the firmware of the second hypervisor.

9. The information processing device according to claim 8, wherein when a first format for the particular information and a second format for information used by the second hypervisor are different, the control unit is arranged to convert the particular information from the first format to the second format and store the format-converted particular information into the second memory area.

10. The information processing device according to any one of claims 7 to 9, further comprising:

a firmware storage unit that is arranged to store the firmware of the second hypervisor in advance; and
a management unit that is arranged to receive a replacing instruction or a recovering instruction and notifies the control unit of reception of the replacing instruction or the recovering instruction, wherein
the replacing instruction is arranged to instruct the information processing device to replace the first hypervisor with the second hypervisor,
the recovering instruction is arranged to instruct the information processing device to recover the first hypervisor from the second hypervisor,
when the designating information indicates the first value and the management unit receives the replacing instruction, the control unit is arranged to:

read the firmware of the second hypervisor from the firmware storage unit and
store the read firmware of the second hypervisor into the second memory area, and

when the designating information indicates the second value and the management unit receives the recovering instruction, the control unit is arranged to:

issue, from the second hypervisor, a new stopping instruction that instructs the caller to stop issuing a new hypervisor call, rewrite the designating information from the second value to the first value, start execution of the firmware of the first hypervisor in response to rewriting of the designating information, and issue, from the first hypervisor to the caller, a new canceling instruction that cancels the new stopping instruction.

11. The information processing device according to claim 10, wherein the firmware storage unit is a third memory area in the one or more memory modules or another storage device different from the one or more memory modules.

12. The information processing device according to any one of claims 7 to 11, wherein
one of the one or more memory modules is arranged to store the designating information at a predetermined address; or
a number of the one or more memory modules is one, the information processing device further comprises an address translation circuit that is arranged to translate a logical address into a physical address of the one memory module, and the address translation circuit is arranged to store the designating information; or
the number of the one or more memory modules is plural, the information processing device further comprises a memory module switch controlling circuit that is arranged to control switching between the plural memory modules, and the memory module switch controlling circuit is arranged to store the designating information; or
the information processing device further comprises a predetermined register and the predetermined register is arranged to store the designating information.

13. Firmware of a first hypervisor to cause a computer to execute a process, the process comprising:

issuing a canceling instruction that instructs a caller of a hypervisor call to cancel stopping issuance of a new hypervisor call;
storing firmware of a second hypervisor into a second memory area different from a first memory area that stores the firmware of the first hypervisor;
issuing a stopping instruction that instructs the caller to stop issuing a new hypervisor call;
rewriting designating information from a first value to a second value wherein the designating information designates a memory area storing firmware of a hypervisor executed by the computer, the first value designates the first memory area, and the second value designates the second memory area; and
switching the first hypervisor to the second hypervisor by designating an instruction included in the firmware of the second hypervisor stored in the second memory area as an instruction to be executed next by the computer, wherein in response to a replacing instruction that instructs the computer to replace the first hypervisor with the second hypervisor, the firmware of the first hypervisor causes the computer to execute the storing, the issuing of the stopping instruction, the rewriting, and the switching.

14. The firmware according to claim 13, wherein the firmware of the first hypervisor causes the computer to further execute a data loading process before the switching, and
the data loading process is a process of storing, into the second memory area, particular information that is stored in the first memory area and that is used by the first hypervisor.

15. The firmware according to claim 14, wherein the data loading process includes:

comparing a version of a first format for the particular information and a version of a second format for information used by the second hypervisor;
converting, when the version of the first format is newer than the version of the second format, the particular information from the first format to the second format in accordance with the firmware of the first hypervisor; and
converting, when the version of the second format is newer than the version of the first format, the particular information from the first format to the second format by calling an instruction that is included in the firmware of the second hypervisor stored in the second memory area and that is for conversion from the first format to the second format.

S1

2a — OS    OS — 2b

HYPERVISOR

1a    3

S2

2a — OS    OS — 2b

HYPERVISOR    HYPERVISOR

1a    3    1b

S3

2a — OS    OS — 2b

HYPERVISOR    HYPERVISOR

1a    3    1b

S4

2b

2a — OS    OS

HYPERVISOR    HYPERVISOR

1a    3    1b

S5

2a — OS    OS — 2b

HYPERVISOR    HYPERVISOR

1a    3    1b

F I G .   1

F I G. 2

F I G.  3

SYSTEM BOARD

330a 330b 330c 220a

DOMAIN DOMAIN DOMAIN

331a 331b 331c

SUSPENSION CONTROL UNIT

SUSPENSION CONTROL UNIT

SUSPENSION CONTROL UNIT

HYPERVISOR 320

HARDWARE 310

CPU DIMM I/O

221 224 311

F I G. 4

ADDRESS

A0 — VALID MAP ADDRESS — 411 — COMMON AREA — 410

A1 — DATA AREA — 421

A2 — CODE AREA — 422 — UPPER AREA — 420

A3 — DATA AREA — 431

A4 — CODE AREA — 432 — LOWER AREA — 430

A5 — ⋮

400

F I G. 5

500

RELATIVE ADDRESS
IN FIRMWARE

B0

ADDRESS MAP

501

B1

VERSION NUMBER OF HYPERVISOR

502

B2

VERSION NUMBER OF DATA FORMAT

503

B3

VALID/INVALID FLAG FOR DYNAMIC
REPLACEMENT FUNCTION

504

B4

AREA-IN-USE FLAG

505

B5

DOMAIN CONTROL DATA

506

B6

⋮

F I G.  6

RELATIVE
ADDRESS IN
FIRMWARE

600

| | |
|---|---|
| C0 | CODE OF SUSPENSION CANCELING PROCESS | 601 |
| C1 | CODE OF WAITING PROCESS | 602 |
| C2 | CODE OF PREPROCESSING | 603 |
| C3 | CODE OF CODE LOADING PROCESS | 604 |
| C4 | CODE OF DATA LOADING PROCESS | 605 |
| C5 | CODE OF DATA CONVERTING PROCESS | 606 |
| C6 | CODE OF ACCESS SUSPENDING PROCESS | 607 |
| C7 | CODE OF FIRMWARE SWITCHING PROCESS | 608 |
| C8 | ⋮ | |

F I G. 7

FIRMWARE OF
SERVICE
PROCESSOR 210

FIRMWARE OF
HYPERVISOR
STORED IN
UPPER AREA 420

FIRMWARE OF
HYPERVISOR
STORED IN
LOWER AREA 430

DOMAIN 330

411

WRITE FIRMWARE OF
TARGET HYPERVISOR

VALID MAP
ADDRESS

A1

S102

S101

EPROM

222

HYPERVISOR CALL

RESPONSE
S103

NOTIFICATION OF
COMPLETION OF
WRITING

S104

LOAD FIRMWARE OF TARGET HYPERVISOR ONTO MEMORY

S105

S106

COPY DATA IN DATA AREA

HYPERVISOR
CALL

S108

S107

STOPPING INSTRUCTION

RESPONSE

REWRITE VALID MAP
ADDRESS

S110

411

S109

SUSPENSION
PERIOD

VALID MAP
ADDRESS

A3

S111

CANCELING
INSTRUCTION

NOTIFICATION OF COMPLETION
OF REPLACEMENT

S112

S113

HYPERVISOR CALL

RESPONSE

S114

F I G.   8

START

PREPROCESSING ──S201

PROCESSING TYPE ──S202

1        0        2

CODE LOADING PROCESS ──S203        END

DATA LOADING PROCESS ──S204

SWITCHING PROCESS ──S205

END

F I G. 9

START

MANAGEMENT UNIT STORES FIRMWARE OF
HYPERVISOR IN EPROM — S301

MANAGEMENT UNIT NOTIFIES
PREPROCESSING UNIT IN CONTROL UNIT
OF COMPLETION OF STORAGE OF
FIRMWARE — S302

IS DYNAMIC
FIRMWARE REPLACEMENT FUNCTION
VALID? — S303

NO

YES

IS FIRMWARE
STORED IN EPROM THE
SAME AS FIRMWARE OF HYPERVISOR
THAT IS CURRENTLY
RUNNING? — S304

YES

NO

PROCESSING TYPE ← 0 — S305

END

IS
FIRMWARE
STORED IN EPROM THE SAME
AS FIRMWARE ALREADY LOADED
INTO INACTIVE
AREA? — S306

YES

NO

PROCESSING TYPE ← 2 — S308

PROCESSING TYPE ← 1 — S307

END

END

F I G. 1 0

```
        ┌─────────────┐
        │    START    │
        └──────┬──────┘
               │
               ▼
┌────────────────────────────────────────────────┐
│ LOAD, INTO CODE AREA IN INACTIVE AREA OF TWO    │ ╮ S401
│ MEMORY AREAS FOR HYPERVISOR OPERATION, CODE     │ │
│ OF FIRMWARE STORED IN EPROM                     │ ╯
└────────────────────┬───────────────────────────┘
                     │
                     ▼
              ┌─────────────┐
              │     END     │
              └─────────────┘
```

F I G. 1 1

START

S501

PROCESSING TYPE

1

2

S502

COPY STATIC DATA IN DATA AREA OF TARGET HYPERVISOR STORED IN
EPROM TO DATA AREA IN INACTIVE AREA IN DIMM

S503

IS THERE
CHANGE IN DATA
FORMAT?

NO

YES

S504

COPY DOMAIN CONTROL DATA IN
ACTIVE AREA TO INACTIVE AREA

END

NO

S505

IS VERSION
OF DATA FORMAT FOR
TARGET HYPERVISOR
NEWER?

YES

S506

S507

ADDRESS TO JUMP TO ←
ADDRESS OF CODE OF DATA
CONVERTING PROCESS IN ACTIVE
AREA

ADDRESS TO JUMP TO ←
ADDRESS OF CODE OF DATA
CONVERTING PROCESS IN INACTIVE
AREA

S508

INPUT ADDRESS ←
STARTING ADDRESS OF DOMAIN CONTROL DATA IN ACTIVE AREA

S509

OUTPUT ADDRESS ←
STARTING ADDRESS OF DOMAIN CONTROL DATA IN INACTIVE AREA

S510

INPUT VERSION NUMBER ←
VERSION NUMBER OF DATA FORMAT FOR CURRENT HYPERVISOR

S511

OUTPUT VERSION NUMBER ←
VERSION NUMBER OF DATA FORMAT FOR TARGET HYPERVISOR

S512

USING INPUT ADDRESS, OUTPUT ADDRESS, INPUT VERSION NUMBER, AND
OUTPUT VERSION NUMBER AS ARGUMENTS, CALL AND EXECUTE PROCESS AT
ADDRESS TO JUMP TO

END

F I G.  1 2

START

FROM CURRENT HYPERVISOR, INSRTUCT DOMAINS TO TEMPORARILY SUSPEND ACCESS TO HYPERVISOR — S601

IF THERE IS PROCESS FOR WHICH REQUEST FROM ANY DOMAIN HAS ALREADY BEEN ACCEPTED, EXECUTE AND COMPLETE THE PROCESS — S602

VALID MAP ADDRESS ← STARTING ADDRESS OF CURRENT INACTIVE AREA — S603

CONTROL REGISTER FOR TRAP INSTRUCTION ← STARTING ADDRESS OF CURRENT INACTIVE AREA — S604

AREA-IN-USE FLAG IN AREA THAT IS NOT AREA INDICATED BY VALID MAP ADDRESS ← 0 — S605

AREA-IN-USE FLAG IN AREA INDICATED BY VALID MAP ADDRESS ← 1 — S606

PROGRAM COUNTER IN CPU ← (VALID MAP ADDRESS) + (ADDRESS OF CODE OF SUSPENSION CANCELING PROCESS INDICATED BY ADDRESS MAP IN AREA INDICATED BY VALID MAP ADDRESS) — S607

FROM HYPERVISOR THAT HAS NEWLY SWITCHED TO "CURRENT HYPERVISOR", INSTRUCT DOMAINS TO CANCEL SUSPENSION OF ACCESS TO HYPERVISOR — S608

NOTIFY MANAGEMENT UNIT OF COMPLETION OF REPLACEMENT OF FIRMWARE — S609

START WAITING PROCESS BY INCREMENTING PROGRAM COUNTER — S610

END

F I G. 1 3

F I G.   1 4

START

FROM CURRENT HYPERVISOR, INSTRUCT DOMAINS TO TEMPORARILY SUSPEND ACCESS TO HYPERVISOR — S701

IF THERE IS PROCESS FOR WHICH REQUEST FROM ANY DOMAIN HAS ALREADY BEEN ACCEPTED, EXECUTE AND COMPLETE THE PROCESS — S702

AREA-IN-USE FLAG IN ACTIVE AREA ← 0 — S703

AREA-IN-USE FLAG IN INACTIVE AREA ← 1 — S704

INSTRUCT MEMORY MODULE SWITCH CONTROLLING CIRCUIT TO SWITCH DIMM — S705

PROGRAM COUNTER IN CPU ← (STARTING ADDRESS OF ACTIVE AREA) + (ADDRESS OF CODE OF SUSPENSION CANCELING PROCESS INDICATED BY ADDRESS MAP IN ACTIVE AREA) — S706

FROM HYPERVISOR THAT HAS NEWLY SWITCHED TO "CURRENT HYPERVISOR", INSTRUCT DOMAINS TO CANCEL SUSPENSION OF ACCESS TO HYPERVISOR — S707

NOTIFY MANAGEMENT UNIT OF COMPLETION OF REPLACEMENT OF FIRMWARE — S708

START WAITING PROCESS BY INCREMENTING PROGRAM COUNTER — S709

END

F I G. 1 5

**EUROPEAN SEARCH REPORT**

Europäisches
Patentamt
European
Patent Office
Office européen
des brevets

Application Number

EP 12 16 0630

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 643 361 A2 (MICROSOFT CORP [US]) 5 April 2006 (2006-04-05) * paragraph [0023] - paragraph [0032]; figure 4 * ----- | 1-15 | INV. G06F9/445 |
| X | EP 0 959 405 A2 (NORTEL NETWORKS CORP [CA] NORTEL NETWORKS LTD [CA]) 24 November 1999 (1999-11-24) * paragraph [0035] - paragraph [0052]; figures 4,8 * ----- | 1-15 | |
| X | WO 2008/058101 A2 (SANDISK CORP [US]; GAVENS LEE MERRILL [US]; SCHROTER CHARLES MICHAEL []) 15 May 2008 (2008-05-15) * page 6 - page 12; figure 5 * ----- | 1-15 | |
| A | EP 2 042 987 A2 (REDBACK NETWORKS INC [US]) 1 April 2009 (2009-04-01) * paragraph [0029] - paragraph [0041] * ----- | 1-15 | |
| A | EP 1 705 566 A1 (NEC CORP [JP]) 27 September 2006 (2006-09-27) * paragraph [0012] - paragraph [0025]; figures 2,4 * ----- | 1-15 | TECHNICAL FIELDS SEARCHED (IPC) G06F |

The present search report has been drawn up for all claims

| Place of search | Date of completion of the search | Examiner |
|---|---|---|
| Munich | 19 July 2012 | Kalejs, Eriks |

EPO FORM 1503 03.82 (P04C01)

**EP 2 508 990 A1**

## ANNEX TO THE EUROPEAN SEARCH REPORT
## ON EUROPEAN PATENT APPLICATION NO.

EP 12 16 0630

This annex lists the patent family members relating to the patent documents cited in the above-mentioned European search report.
The members are as contained in the European Patent Office EDP file on
The European Patent Office is in no way liable for these particulars which are merely given for the purpose of information.

19-07-2012

| Patent document cited in search report | | Publication date | Patent family member(s) | | Publication date |
|---|---|---|---|---|---|
| EP 1643361 | A2 | 05-04-2006 | CN | 1770121 A | 10-05-2006 |
| | | | EP | 1643361 A2 | 05-04-2006 |
| | | | JP | 2006107500 A | 20-04-2006 |
| | | | KR | 20060051932 A | 19-05-2006 |
| | | | US | 2006075076 A1 | 06-04-2006 |
| EP 0959405 | A2 | 24-11-1999 | CA | 2272508 A1 | 22-11-1999 |
| | | | DE | 69926834 D1 | 29-09-2005 |
| | | | DE | 69926834 T2 | 19-01-2006 |
| | | | EP | 0959405 A2 | 24-11-1999 |
| | | | US | 6070012 A | 30-05-2000 |
| WO 2008058101 | A2 | 15-05-2008 | TW | 200832226 A | 01-08-2008 |
| | | | WO | 2008058101 A2 | 15-05-2008 |
| EP 2042987 | A2 | 01-04-2009 | CA | 2626781 A1 | 27-03-2009 |
| | | | EP | 2042987 A2 | 01-04-2009 |
| | | | KR | 20090032922 A | 01-04-2009 |
| | | | SG | 151153 A1 | 30-04-2009 |
| | | | US | 2009089774 A1 | 02-04-2009 |
| EP 1705566 | A1 | 27-09-2006 | CA | 2538559 A1 | 22-09-2006 |
| | | | CN | 1838602 A | 27-09-2006 |
| | | | EP | 1705566 A1 | 27-09-2006 |
| | | | JP | 2006268172 A | 05-10-2006 |
| | | | KR | 20060102526 A | 27-09-2006 |
| | | | US | 2006218545 A1 | 28-09-2006 |

EPO FORM P0459

For more details about this annex : see Official Journal of the European Patent Office, No. 12/82

46

**EP 2 508 990 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002342102 A